# EUROPÄISCHE PATENTSCHRIFT

(11) **EP 2 633 638 B1**
(45) Veröffentlichungstag und Bekanntmachung des Hinweises auf die Patenterteilung: **25.02.2015**
(21) Anmeldenummer: 11766939.0
(22) Anmeldetag: 27.09.2011
(51) Int. Cl.: H04L 7/04, H04L 27/00, H04L 25/03

(54) **ÜBERTRAGUNG EINES DATENPAKETS MIT ZWEI REFERENZSEQUENZEN UND ENTSPRECHENDER EMPFÄNGER MIT EINEM ENTZERRER**
TRANSMISSION OF A DATA PACKET WITH TWO REFERENCE SEQUENCES AND A CORRESPONDING RECEIVER WITH AN EQUALIZER
TRANSMISSION D'UN PACQUET DE DONNÉES AVEC TWO SÉQUENCES DE REFERENCE ET UN RÉCEPTEUR CORRESPONDANT AVEC UN ÉGALISATEUR

(30) Priorität: 29.10.2010 DE 102010043151
(43) Veröffentlichungstag der Anmeldung: 04.09.2013
(73) Patentinhaber: Fraunhofer-Gesellschaft zur Förderung der angewandten Forschung e.V., 80686 München (DE)
(72) Erfinder: BERNHARD, Josef, 92507 Nabburg (DE); KILIAN, Gerd, 91056 Erlangen (DE); TASCH, Andreas, 91074 Herzogenaurach (DE)
(74) Vertreter: Hersina, Günter
(86) Internationale Anmeldenummer: PCT/EP2011/066779
(87) Internationale Veröffentlichungsnummer: WO 2012/055662

(56) Entgegenhaltungen:
- EP-A1- 1 283 607
- JP-A- 2003 115 783
- US-A- 4 852 090
- US-A- 5 257 265
- US-A- 5 400 362
- US-B1- 6 693 983
- KHAYRALLAH A S ET AL: "MAP equalization for DQPSK in multi-pass demodulation", VEHICULAR TECHNOLOGY CONFERENCE, 2000. IEEE VTS FALL VTC 2000. 52ND SEPT. 24-28, 2000, PISCATAWAY, NJ, USA,IEEE, Bd. 5, 24. September 2000 (2000-09-24), Seiten 2249-2254, XP010522181, ISBN: 978-0-7803-6507-0

## Beschreibung

Ausführungsbeispiele der vorliegenden Erfindung betreffen einen Datensender zum Senden eines Datenpakets an einen Datenempfänger, insbesondere einen Datensender, der zur Synchronisation des Datenpakets im Datenempfänger und zur Entzerrung kanalcodierter Datenpakete, Datenpakete mit zwei Referenzsequenzen erzeugt und über einen Kommunikationskanal an den Datenempfänger sendet.

Bei der Übertragung von kleinen Datenmengen, beispielsweise von Daten bzw. Nutzdaten eines Sensors, wie z. B. von einem Heizungs-, Strom- oder Wasserzähler, kann ein Funkübertragungssystem zum Einsatz kommen. An dem Sensor wird hierzu in der Regel eine Messeinrichtung mit einem Funksender (Datensender) angebracht, der die Daten mittels eines burstartigen Datenpakets an einen Datenempfänger überträgt. Zur Synchronisation des Datenpakets im Datenempfänger werden bei digitalen Funkübertragungssystemen bzw. Funkkommunikationssystemen in der Regel Trainingssequenzen bzw. Piloten genutzt. Trainingssequenzen sind deterministische oder pseudozufällige binäre Datenfolgen, z. B. PRBS-Sequenzen (PRBS = pseudo random bit stream, pseudozufälliger Bitstrom), die von dem Datensender zusammen mit den eigentlichen Nutzdaten in dem Datenpaket an den Datenempfänger gesendet werden. Dem Datenempfänger sind die Trainingssequenzen bekannt. Durch Korrelation eines Empfangsdatenstroms mit den bekannten Trainingssequenzen kann der Datenempfänger die zeitliche Position der bekannten Trainingssequenzen in dem Empfangsdatenstrom ermitteln. Dabei weist die Korrelationsfunktion an der Stelle der Trainingssequenz im Empfangsdatenstrom ein Korrelationspeak auf, der umso höher bzw. größer ist, desto besser der Empfangsdatenstrom mit den bekannten Trainingssequenzen übereinstimmt. Je stärker der Empfangsdatenstrom bzw. ein Übertragungssignal jedoch von einem Rauschen überlagert ist, umso geringer bzw. kleiner ist der Korrelationspeak der Korrelationsfunktion.

In der Veröffentlichung "A Concept for Data-Aided Carrier Frequency Estimation at Low Signal-to-Noise Ratios" von Susanne Godtmann, Niels Hadaschik, Wolfgang Steinert und Gerd Ascheid wird die Trainingssequenz in zwei Teile, die zueinander beabstandet sind, aufgeteilt, wodurch es möglich ist, eine verbesserte Frequenzschätzung durchzuführen.

Die Schrift US 6430417 B1 (Raith Krister; 6. Aug. 2002) offenbart den Oberbegriff von Anspruch 1 und Anspruch 20.

Bei einem Funkübertragungssystem, bei dem mittels Code Combining, also durch Kombination zweier oder mehrerer Datenpakete ein Codegewinn bzw. Codierungsgewinn realisiert wird, indem redundante Informationen in mehreren unterschiedlichen Datenpaketen zu unterschiedlichen Zeiten übertragen werden, ist es notwendig, die einzelnen Datenpakete auch dann noch zu detektieren, wenn das Signalrauschverhältnis (SNR) sehr niedrig ist und zur (vollständigen) Decodierung eines einzelnen Datenpakets nicht mehr ausreicht. Je nach Codegewinn durch die Kombination mehrerer Datenpakete sinkt das für die Dekodierung notwendige bzw. erforderliche Signalrauschverhältnis an dem Datenempfänger, bei dem die Daten noch detektiert werden können. Zur Realisierung des Codegewinns ist es jedoch erforderlich, dass die einzelnen Datenpakete selbst bei einem niedrigem Signalrauschverhältnis in dem Empfangsdatenstrom gefunden bzw. ermittelt werden oder teilweise, wenn auch falsch, decodiert werden können.

Der vorliegenden Erfindung liegt somit die Aufgabe zugrunde, ein Konzept zu schaffen, das eine Übertragung eines Datenpakets von einem Datensender zu einem Datenempfänger über einen Kommunikationskanal selbst bei schlechten Signalrauschverhältnissen ermöglicht.

Diese Aufgabe wird durch einen Datensender gemäß Anspruch 1, einem Datenempfänger gemäß Anspruch 8, einem Verfahren zum Senden eines Datenpakets gemäß Anspruch 20, einem Verfahren zum Empfangen eines Datenpakets gemäß Anspruch 21, oder einem Computerprogramm gemäß Anspruch 24 gelöst.

Die Erfindung schafft einen Datensender zum Senden eines Datenpakets über einen Kommunikationskanal zu einem Datenempfänger mit einer Einrichtung zum Erzeugen des Datenpakets und einer Einrichtung zum Senden des Datenpakets. Die Einrichtung zum Erzeugen des Datenpakets ist ausgebildet, um ein Datenpaket mit einem ersten Datenblock und einem zweiten Datenblock und einer vorgegebenen ersten Referenzsequenz und zweiten Referenzsequenz zur Synchronisation des Datenpakets im Datenempfänger zu erzeugen, wobei die erste Referenzsequenz länger ist als die zweite Referenzsequenz, und wobei sich in dem Datenpaket der zweite Datenblock zwischen der ersten Referenzsequenz und der zweiten Referenzsequenz und sich die erste Referenzsequenz zwischen dem ersten Datenblock und dem zweiten Datenblock befindet. Die Einrichtung zum Senden des Datenpakets ist ausgebildet, um das Datenpaket über den Kommunikationskanal an den Datenempfänger zu senden.

Die Erfindung schafft ferner einen Datenempfänger zum Empfangen eines Datenpakets von einem Datensender über einen Kommunikationskanal, wobei das Datenpaket einen ersten Datenblock und einen zweiten Datenblock und eine vorgegebene erste Referenzsequenz und zweite Referenzsequenz zur Synchronisierung des Datenpakets im Datenempfänger aufweist, wobei sich in dem Datenpaket der zweite Datenblock zwischen der ersten Referenzsequenz und der zweiten Referenzsequenz und sich die erste Referenzsequenz zwischen dem ersten Datenblock und dem zweiten Datenblock befindet. Der Datenempfänger weist dabei eine Einrichtung zum Empfangen des Datenpakets auf, die ausgebildet ist, um die erste Referenzsequenz und die zweite Referenzsequenz des Datenpakets in dem Empfangsdatenstrom zu lokalisieren, und um das Datenpaket basierend auf einem ermittelbaren Übertragungsparameter, der aus der ersten Referenzsequenz und der zweiten Referenzsequenz ableitbar ist, zu ermitteln bzw. zu erfassen (z. B. entzerren).

Bei Ausführungsbeispielen erzeugt der Datensender ein Datenpaket mit einer ersten Referenzsequenz und einer zweiten Referenzsequenz. Dem Datenempfänger sind die erste und die zweite Referenzsequenz bekannt, wodurch der Datenempfänger in der Lage ist, die erste Referenzsequenz und die zweite Referenzsequenz und somit das Datenpaket in einem Empfangsdatenstrom zu lokalisieren. Durch die Ausbildung des erfindungsgemäßen Datenpakets, das eine erste lange Referenzsequenz aufweist, die sich in dem Datenpaket zwischen dem ersten Datenblock und dem zweiten Datenblock befindet, und das eine zweite Referenzsequenz aufweist, die kürzer ist als die erste Referenzsequenz und die sich in dem Datenpaket mittels des zweiten Datenblocks beabstandet von der ersten Referenzsequenz befindet, ist es möglich, die erste Referenzsequenz und die zweite Referenzsequenz in dem Empfangsdatenstrom selbst bei einem geringen Signalrauschverhältnis zu lokalisieren bzw. zu detektieren.

Ferner kann die Einrichtung zum Erzeugen des Datenpakets des Datensenders ausgebildet sein, um in dem Datenpaket die erste Referenzsequenz in eine erste Referenzteilsequenz und zweite Referenzteilsequenz zu unterteilen, wobei die erste Referenzteilsequenz und die zweite Referenzteilsequenz jeweils die Länge der zweiten Referenzsequenz aufweisen.

Bei einem bevorzugten Ausführungsbeispiel ist die Einrichtung zum Erzeugen des Datenpakets des Datensenders ausgebildet, um in dem Datenpaket die erste Referenzteilsequenz, die zweite Referenzteilsequenz und die zweite Referenzsequenz jeweils als ML-Sequenz (MLS = maximum length sequence, Folge maximaler Länge) mit einem zusätzlichen Binärelement vorzusehen.

Die Einrichtung zum Erzeugen des Datenpakets des Datensenders kann ferner ausgebildet sein, um den ersten Datenblock und den zweiten Datenblock des Datenpakets von einem ersten Basisdatenblock abzuleiten.

Zusätzlich kann die Einrichtung zum Erzeugen eines Datenpakets des Datensenders ausgebildet sein, um einen dritten Datenblock und einen vierten Datenblock von einem zweiten Basisdatenblock abzuleiten, und um den dritten Datenblock und den vierten Datenblock in dem Datenpaket vorzusehen, wobei sich der dritte Datenblock in dem Datenpaket an einem Datenpaketende und sich der vierte Datenblock in dem Datenpaket an einem Datenpaketanfang befindet.

Bei einem bevorzugten Ausführungsbeispiel kann die Einrichtung zum Empfangen des Datenpakets des Datenempfängers ferner ausgebildet sein, um den Empfangsdatenstrom mit der ersten Referenzsequenz und der zweiten Referenzsequenz, die dem Datenempfänger bekannt sind, zu korrelieren, um die erste Referenzsequenz und die zweite Referenzsequenz des Datenpakets in dem Empfangsdatenstrom zu lokalisieren.

Darüber hinaus kann der Datenempfänger eine Einrichtung zum Entzerren der Datenblöcke des Datenpakets aufweisen, die ausgebildet ist, um eine Entzerrung für den ersten Datenblock basierend auf der ersten Referenzsequenz durchzuführen, um einen entzerrten ersten Datenblock zu erhalten, und um eine Entzerrung für den zweiten Datenblock basierend auf der ersten Referenzsequenz oder einer dem zweiten Datenblock benachbarten Referenzteilsequenz und der zweiten Referenzsequenz durchzuführen, um einen entzerrten zweiten Datenblock zu erhalten.

Die Einrichtung zum Entzerren der Datenblöcke des Datenempfängers kann ausgebildet sein, um den entzerrten ersten Datenblock und zweiten Datenblock zu decodieren, um einen decodierten ersten Datenblock und zweiten Datenblock zu erhalten. Ferner kann die Einrichtung zum Entzerren der Datenblöcke des Datenempfängers ausgebildet sein, um den decodierten ersten Datenblock oder zweiten Datenblock zu encodieren, um einen encodierten ersten Datenblock oder zweiten Datenblock zu erhalten. Eine Entzerrung für einen dritten Datenblock kann basierend auf dem encodierten ersten Datenblock durchgeführt werden, falls der erste Datenblock in dem Datenpaket einen zeitlich geringeren Abstand zu dem dritten Datenblock aufweist als der zweite Datenblock. Alternativ kann eine Entzerrung für den dritten Datenblock basierend auf dem encodierten zweiten Datenblock durchgeführt werden, falls der zweite Datenblock in dem Datenpaket einen zeitlich geringeren Abstand zu dem dritten Datenblock aufweist als der erste Datenblock. Ferner kann eine Entzerrung für einen vierten Datenblock basierend auf dem encodierten ersten Datenblock durchgeführt werden, falls der erste Datenblock in dem Datenpaket einen zeitlich geringeren Abstand zu dem vierten Datenblock aufweist als der zweite Datenblock. Alternativ kann eine Entzerrung für den vierten Datenblock basierend auf dem encodierten zweiten Datenblock durchgeführt werden, falls der zweite Datenblock in dem Datenpaket einen zeitlich geringeren Abstand zu dem vierten Datenblock aufweist als der erste Datenblock. Des Weiteren können der dritte Datenblock und der vierte Datenblock von einem zweiten Basisdatenblock abgeleitet sein, wobei sich der dritte Datenblock in dem Datenpaket an einem Datenpaketende und sich der vierte Datenblock in dem Datenpaket an einem Datenpaketanfang befindet.

Zusätzlich kann die Einrichtung zum Entzerren der Datenblöcke des Datenempfängers ausgebildet sein, um die Entzerrung für den ersten Datenblock, den zweiten Datenblock, den dritten Datenblock und den vierten Datenblock unter Verwendung einer Frequenzschätzung, Phasenschätzung oder Kanalschätzung durchzuführen.

Weitere Ausführungsbeispiele der Erfindung beziehen sich darüber hinaus auf Verfahren zum Senden eines Datenpakets und zum Empfangen eines Datenpakets sowie auf Computerprogramme zur Durchführung der erfindungsgemäßen Verfahren.

Ausführungsbeispiele der vorliegenden Erfindung werden nachfolgend unter Bezugnahme auf die beiliegenden Zeichnungen näher erläutert. Es zeigen:
- Fig. 1: eine schematische Ansicht eines Ausführungsbeispiels eines Datensenders sowie ein Ausführungsbeispiel eines von dem Datensender gesendeten Datenpakets;
- Fig. 2a,b,c: drei Ausführungsbeispiele der von dem Datensender gesendeten Datenpakete, jeweils in einer schematischen Ansicht;
- Fig. 3a, b: Ausführungsbeispiele der Korrelationsfunktion für drei aufeinanderfolgende ML-Sequenzen und für eine abgetrennte dritte ML-Sequenz, jeweils in einer schematischen Ansicht;
- Fig. 4a,b: zwei Ausführungsbeispiele der von dem Datensender gesendeten Datenpakete mit einem dritten Datenblock, jeweils in einer schematischen Ansicht;
- Fig. 5: eine schematische Ansicht eines Ausführungsbeispiels eines Verfahrens zum Erzeugen eines Datenpakets aus einem ersten Basisdatenblock und einem zweiten Basisdatenblock;
- Fig. 6: eine schematische Ansicht eines Ausführungsbeispiels eines von dem Datensender gesendeten Datenpakets, wobei die erste Referenzsequenz zwei ML-Sequenzen mit jeweils einem Binärelement und die zweite Referenzsequenz eine ML-Sequenz mit einem Binärelement aufweist;
- Fig. 7: eine schematische Ansicht eines Ausführungsbeispiels eines Datenempfängers sowie eines von dem Datenempfänger empfangenen Datenpaket;
- Fig. 8: eine schematische Ansicht eines Ausführungsbeispiels eines Verfahrens zum Entzerren der Datenblöcke eines Datenpakets.

In der nachfolgenden Beschreibung der Ausführungsbeispiele der Erfindung werden in den Figuren gleiche oder gleichwirkende Elemente mit dem gleichen Bezugszeichen versehen, so dass deren Beschreibung in den unterschiedlichen Ausführungsbeispielen untereinander austauschbar ist.

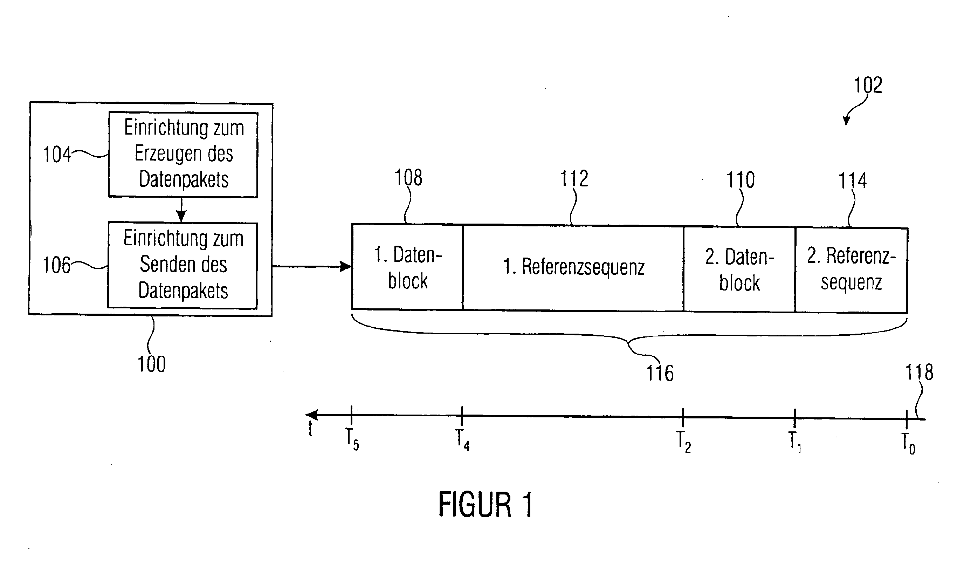

Fig. 1 zeigt eine schematische Ansicht eines Ausführungsbeispiels eines Datensenders 100 sowie ein Ausführungsbeispiel eines von dem Datensender 100 gesendeten Datenpakets 102. Der Datensender 100 ist ausgebildet, um ein Datenpaket 102 über einen Kommunikationskanal zu einem Datenempfänger zu senden. Hierzu weist der Datensender 100 eine Einrichtung 104 zum Erzeugen des Datenpakets 102 und eine Einrichtung 106 zum Senden des Datenpakets 102 auf.

Die Einrichtung 104 zum Erzeugen des Datenpakets 102 ist ausgebildet, um ein Datenpaket 102 mit einem ersten Datenblock 108, einem zweiten Datenblock 110, einer vorgegebenen ersten Referenzsequenz 112 und einer vorgegebene zweiten Referenzsequenz 114 zur Synchronisation des Datenpakets im Datenempfänger zu erzeugen, wobei die erste Referenzsequenz 112 länger ist als die zweite Referenzsequenz 114, und wobei sich in dem Datenpaket 102 der zweite Datenblock 110 zwischen der ersten Referenzsequenz 112 und der zweiten Referenzsequenz 114 und die erste Referenzsequenz 112 zwischen dem ersten Datenblock 108 und dem zweiten Datenblock 110 befindet. Erfindungsgemäß wird somit nicht ein Datenpaket mit nur einer Trainingssequenz bzw. Referenzsequenz erzeugt, sondern ein Datenpaket 102, bei dem die Referenzsequenz in eine erste Referenzsequenz 112 und in eine zweite Referenzsequenz 114 aufgeteilt ist, wobei die erste Referenzsequenz 112 und die zweite Referenzsequenz 114 unterschiedliche Längen aufweisen und in dem Datenpaket 102 mittels eines Datenblocks, z. B. mittels des zweiten Datenblocks 110, voneinander beabstandet sind. Bei einer Hardwareimplementierung kann die Einrichtung 104 zum Erzeugen des Datenpakets 102 ein Mikroprozessor oder Mikrocontroller sein, während die Einrichtung 106 zum Senden des Datenpakets 102 ein Sendebaustein sein kann. Nachfolgend wird ein zeitliches Auftreten eines Datenblocks bzw. einer Referenzsequenz in dem Datenpaket 102 anhand einer Zeitachse 118 beschrieben. Die Zeitpunkte T0 bis TN der Zeitachse 118 können dabei eine zeitliche Abfolge des Sendens der Datenblöcke bzw. Referenzsequenzen kennzeichnen.

Der erste Datenblock 108, die erste Referenzsequenz 112 und der zweite Datenblock 110 bilden einen Datenpaketkernbereich 116, wobei sich in dem Datenpaket 102 die zweite Referenzsequenz 114 benachbart zu dem Datenpaketkernbereich 116 befindet. Dabei kann sich die zweite Referenzsequenz 114 in dem Datenpaket an einem Datenpaketanfang zwischen den Zeitpunkten T₀ und T₁, also zeitlich vor dem Datenpaketkernbereich 116, der sich von dem Zeitpunkt T₁ bis T₅ erstreckt, befinden. Alternativ kann sich die zweite Referenzsequenz 114 in dem Datenpaket 102 an einem Datenpaketende, also zeitlich nach dem Datenpaketkernbereich 116 befinden. Optional können in dem Datenpaket 102 weitere n Datenblöcke (wobei n ein Element der natürlichen Zahlen sein kann) zeitlich vor und/oder nach dem Kernbereich 116 vorgesehen werden.

Die Einrichtung 104 zum Erzeugen des Datenpakets 102 kann ferner ausgebildet sein, um in dem Datenpaket 102 die erste Referenzsequenz 112 und die zweite Referenzsequenz 114 jeweils als pseudozufällige binäre Sequenz, z. B. als PRBS-Sequenz oder ML-Sequenz vorzusehen. ML-Sequenzen sind pseudozufällige binäre Sequenzen mit der Länge (2^{m}-1), wobei die Anzahl der binären Einsen der ML-Sequenz definitionsgemäß um eins höher ist, als die Anzahl der binären Nullen. Im Frequenzbereich ähnelt die Darstellung einer ML-Sequenz weißem Rauschen. Bei Ausführungsbeispielen kann die erste Referenzsequenz 112 und die zweite Referenzsequenz 114 von einer langen pseudozufälligen Sequenz, z. B. von einer ML-Sequenz, abgeleitet sein, wobei die erste Referenzsequenz einem ersten Teil und die zweite Referenzsequenz 114 einem zweiten Teil der langen pseudozufälligen Sequenz entsprechen kann.

Zum Erhalten der Nutzdaten kann die Einrichtung 104 zum Erzeugen des Datenpakets 102 eine Schnittstelle aufweisen, die ausgebildet ist, um z. B. Nutzdaten von einem Sensor zu erhalten. Der Sensor kann dabei z. B. ein Heizungs-, Strom- oder Wasserzähler sein. Es sei jedoch darauf hingewiesen, dass die erfindungsgemäße Vorgehensweise auf beliebige Funkübertragungssysteme zum Übertragen von (z. B. kanalcodierten) Datenpaketen anwendbar ist. Ein Datenblock, z. B. der erste Datenblock 108 oder der zweite Datenblock 110, kann dabei von den Nutzdaten abgeleitet werden. Ferner kann ein Datenblock mit Redundanz, z. B. mit CRC-Bits (CRC = cyclic redundancy check, zyklische Redundanzprüfung), zur Redundanzprüfung versehen sein. Ein Datenblock kann die Nutzdaten ferner in codierter Form aufweisen, wobei bei einem Ausführungsbeispiel die Nutzdaten in dem Datenblock derart codiert sind, dass die codierten Nutzdaten redundante Anteile aufweisen.

Ferner können der erste Datenblock 108 und der zweite Datenblock 110 unterschiedliche Längen aufweisen, wobei der erste Datenblock 108 länger sein kann als der zweite Datenblock (oder umgekehrt). Bei Ausführungsbeispielen kann ein Datenblock somit eine begrenzte, fallweise vorgegebene Anzahl an Bits aufweisen. Alternativ können der erste Datenblock 108 und der zweite Datenblock 110 gleich lang sein, wobei die Länge des ersten Datenblocks 108 und des zweiten Datenblocks 110 im Vorfeld, z. B. bei der Auswertung und Aufbereitung der Nutzdaten, festgelegt bzw. vorgegeben werden kann. Ferner kann die Länge der jeweiligen Datenblöcke dynamisch, z. B. in Abhängigkeit einer Nutzdatendichte oder Nutzdatenmenge, an die Nutzdaten bzw. Informationen angepasst sein, wodurch z. B. ein Datenpaket 102 mit unterschiedlich langen Datenblöcken entstehen kann. Des Weiteren kann die Redundanz der jeweiligen Datenblöcke an eine Priorität bzw. Relevanz der Nutzdaten oder Informationen angepasst sein, so kann z. B. eine Information höherer Relevanz mit mehr Redundanz versehen werden als eine Information niedrigerer Relevanz.

Die Einrichtung 106 zum Senden des Datenpakets 102 ist ausgebildet, um das Datenpaket 102 über den Kommunikationskanal, z. B. in Form einer Funkübertragungsstrecke, an den Datenempfänger zu senden. Bei Ausführungsbeispielen kann die Einrichtung 106 zum Senden des Datenpakets 102 das Datenpaket 102 z. B. mittels einer MSK-Modulation (MSK = minimum shift keying), einer PSK-Modulation (PSK = phase shift keying, digitale Phasenmodulation), einer QAM-Modulation (QAM = Quadraturamplituden Modulation), einer FSK-Modulation (FSK = frequency shift keying, digitale Frequenzmodulation) oder mittels einer anderen analogen oder digitalen Modulation auf einer entsprechenden Trägerfrequenz zu dem Datenempfänger über den Kommunikationskanal senden.

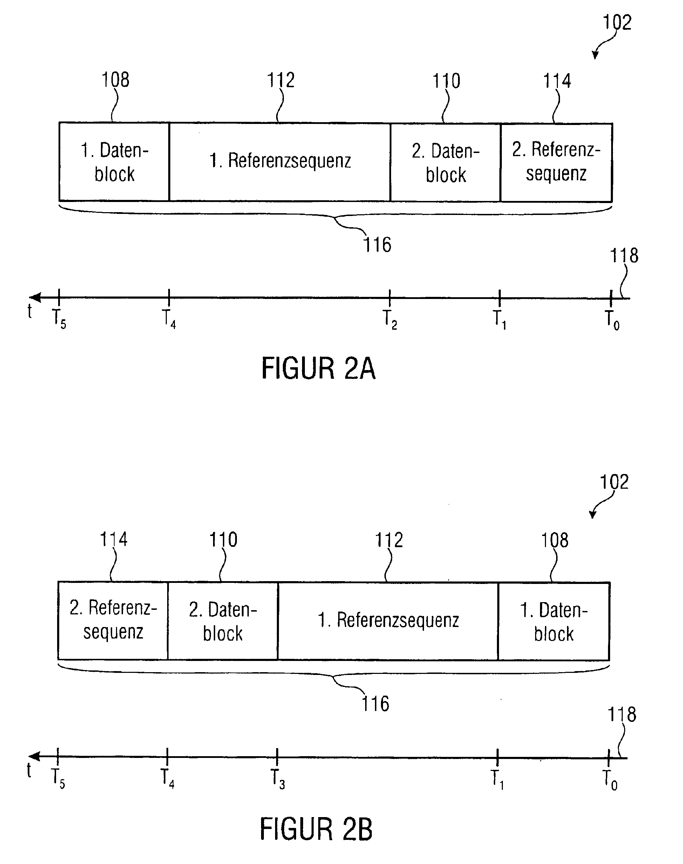

Fig. 2a bis 2c zeigen drei Ausführungsbeispiele für die von dem Datensender 100 gesendeten Datenpakete 102, jeweils in einer schematischen Ansicht. In dem in Fig. 2a gezeigten Ausführungsbeispiel befindet sich der erste Datenblock 108 zeitlich am Datenpaketende zwischen den Zeitpunkten T₄ und T₅. Die erste Referenzsequenz 112 befindet sich in dem Datenpaket 102 zwischen dem ersten Datenblock 108 und dem zweiten Datenblock 110 und erstreckt sich von dem Zeitpunkt T₂ bis T₄, wobei die erste Referenzsequenz 112, der erste Datenblock 108 und der zweite Datenblock 110 einen Dätenpaketkernbereich 116 bilden, der sich von dem Zeitpunkt T₁ bis T₅ erstreckt. Die zweite Referenzsequenz 114, die kürzer ist als die erste Referenzsequenz 112, befindet sich in dem Datenpaket 102 zeitlich vor dem zweiten Datenblock 110 zwischen den Zeitpunkten T₀ und T₁ und somit am Datenpaketanfang.

In dem in Fig. 2b gezeigten Ausführungsbeispiel befindet sich die erste Referenzsequenz 112 ebenfalls zwischen dem zweiten Datenblock 110 und dem ersten Datenblock 108. Die zweite Referenzsequenz 114 befindet sich hingegen am Datenpaketende zwischen den Zeitpunkten T₄ und T₅, so dass sich der Datenpaketkernbereich 116 von dem Zeitpunkt T₀ bis T₄ erstreckt. In dem in Fig. 2b gezeigten Datenpaket 102 befinden sich der erste Datenblock 108, die erste Referenzsequenz 112, der zweite Datenblock 110 und die zweite Referenzsequenz 114 somit, bezogen auf das in Fig. 2a gezeigte Datenpaket, in einer zeitlich umgekehrten Reihenfolge in dem Datenpaket 102.

Die Einrichtung 104 zum Erzeugen des Datenpakets 102 kann ferner ausgebildet sein, um in dem Datenpaket 102 die erste Referenzsequenz 112 (genau) doppelt so lang wie die zweite Referenzsequenz 114 vorzusehen. Darüber hinaus kann die Einrichtung 104 zum Erzeugen des Datenpakets ausgebildet sein, um in dem Datenpaket 102 die erste Referenzsequenz 112 in eine erste Referenzteilsequenz 112a und zweite Referenzteilsequenz 112b zu unterteilen, wobei die erste Referenzteilsequenz 112a und die zweite Referenzteilsequenz 112b jeweils die Länge der zweiten Referenzsequenz 114 aufweisen.

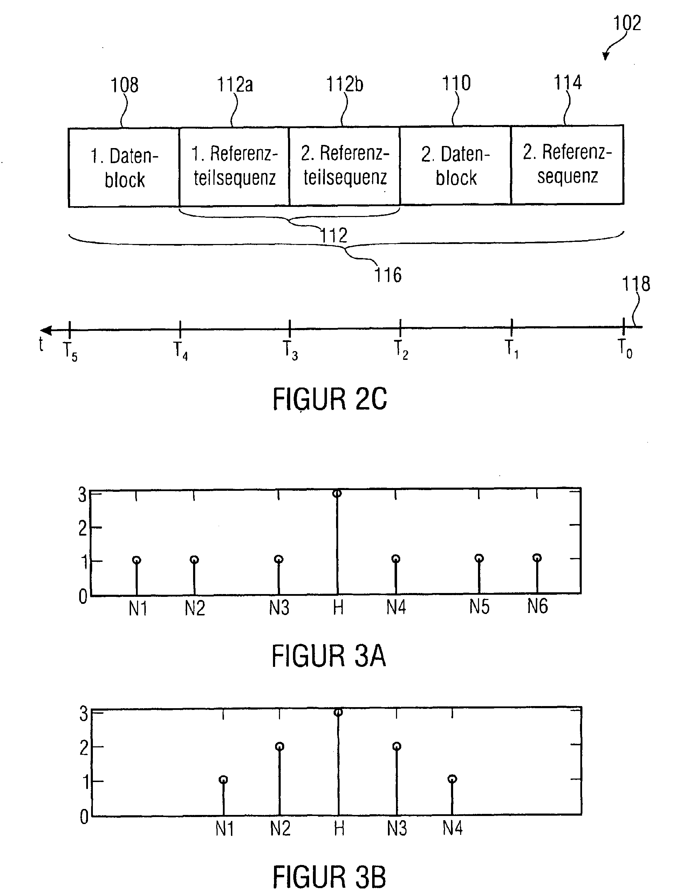

In dem in Fig. 2c gezeigten Ausführungsbeispiel ist die erste Referenzteilsequenz 112a, die zweite Referenzteilsequenz 112b und die zweite Referenzsequenz 114 gleich lang bzw. gleich groß. Ferner bilden in dem in Fig. 2c gezeigten Ausführungsbeispiel der erste Datenblock 108 die erste Referenzteilsequenz 112a, die zweite Referenzteilsequenz 112b und der zweite Datenblock 110 einen Datenpaketkernbereich 116, wobei sich die zweite Referenzsequenz 114 in dem Datenpaket 102 zeitlich vor dem Datenpaketkernbereich 116 befindet. Alternativ kann sich die zweite Referenzsequenz 114 z. B. zeitlich hinter dem Datenpaketkernbereich 116 und somit am Datenpaketende befinden. Ferner kann die erste Referenzteilsequenz 112a, die zweite Referenzteilsequenz 112b und die zweite Referenzsequenz 114 eine zufällige oder pseudozufällige binäre Sequenz sein.

Bei Ausführungsbeispielen kann die Einrichtung 104 zum Erzeugen des Datenpakets 102 ausgebildet sein, um ein Datenpaket 102 zu erzeugen, indem die erste Referenzteilsequenz 112a, die zweite Referenzteilsequenz 112b und die zweite Referenzsequenz 114 gleich sind, d. h. die erste Referenzteilsequenz 112a ist gleich der zweiten Referenzteilsequenz 112b und gleich der zweiten Referenzsequenz 114.

Ferner kann die erste Referenzteilsequenz 112a, die zweite Referenzteilsequenz 112b und die zweite Referenzsequenz 114 jeweils als eine ML-Sequenz mit einem zusätzlichen Binärelement ausgeführt sein, so dass das Datenpaket 102 drei ML-Sequenzen der Länge (2^{m} - 1) aufweist, die jeweils um ein Binärelement verlängert wurden. Das Binärelement kann z. B. eine binäre "Eins" oder eine binäre "Null" sein, wobei das Binärelement innerhalb der Referenzsequenz bzw. Referenzteilsequenz zeitlich vor oder nach der ML-Sequenz angeordnet sein kann. Die ML-Sequenz kann somit mittels des Binärelements um ein Bit verlängert werden, z. B. mit einem Nullbit. Darüber hinaus werden die erste Referenzteilsequenz 112a, die zweite Referenzteilsequenz 112b und die zweite Referenzsequenz 114, nicht sukzessive, sondern in zwei Teilen gesendet, als erste Referenzsequenz 112 und als zweite Referenzsequenz 114, die in dem Datenpaket mittels eines Datenblocks voneinander beabstandet sind. Hierzu werden zwei ML-Sequenzen gleicher Länge zusammengefasst und als erste Referenzsequenz 112 von der dritten ML-Sequenz bzw. zweiten Referenzsequenz 114 mittels eines Datenblocks getrennt.

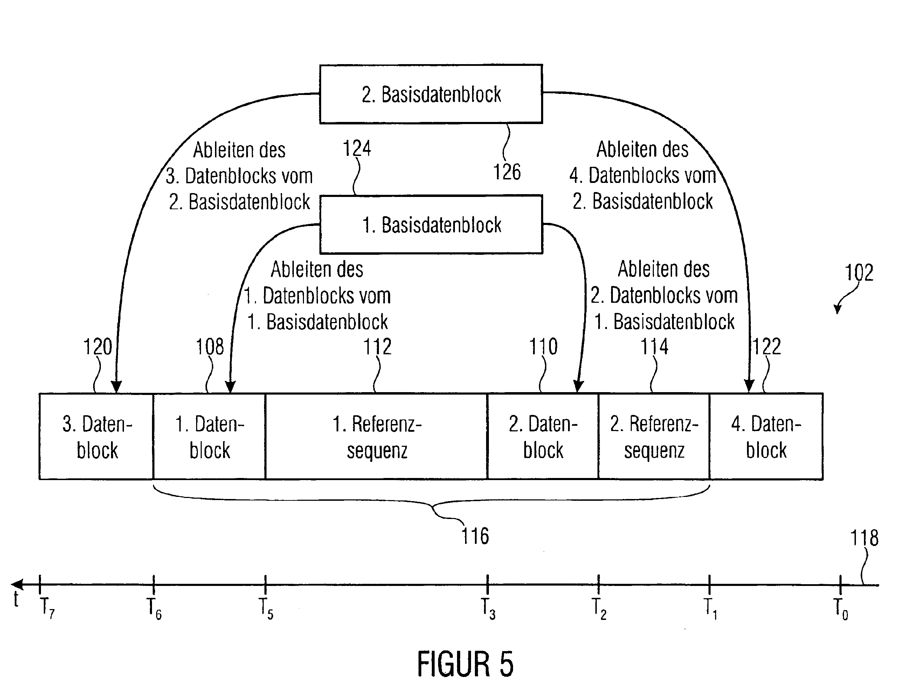

Der erste Datenblock 108 und der zweite Datenblock 110 können von einem Basisdatenblock abgeleitet werden, wie dies anhand der Beschreibung des in Fig. 5 gezeigten Ausführungsbeispiels nachfolgend näher beschrieben wird. Dabei kann sich ein erster Teil des Basisdatenblocks, z. B. der erste Datenblock 108, zeitlich auf einer ersten Seite der ersten Referenzsequenz 112 befinden. Ein zweiter Teil des Basisdatenblocks, z. B. der zweite Datenblock 110, wird in dem Datenpaket zeitlich auf der anderen bzw. zweiten Seite der ersten Referenzsequenz 112 bzw. des ML-Sequenzpaares angeordnet, so dass sich der Basisdatenblock zeitlich vor (links auf der Zeitachse 118) und zeitlich nach (rechts auf der Zeitachse 118) dem ML-Sequenz-Tupel befindet. Bevorzugt erfolgt die Aufteilung des Basisdatenblocks dabei in zwei gleich große Teile bzw. Datenblöcke. Eine äquivalente Aufteilung ist aber nicht zwingend notwendig.

Die Erweiterung der ML-Sequenzen um ein Bit kann vorgenommen werden, da die Bits mit einer (2^n)-stufigen Modulation moduliert werden, beispielsweise mit einer (nicht differentiellen) MSK-Modulation. Besteht eine Sequenz bzw. Referenzsequenz oder Referenzteilsequenz aus einer geraden Anzahl von Bits, so wird das dieser Referenzsequenz oder Referenzteilsequenz folgende Bit bei der MSK-Modulation auf dieselbe Achse eines Konstellationsdiagramms abgebildet wie das erste Bit der ersten Referenzsequenz oder Referenzteilsequenz. Durch die gerade Anzahl an Bits der ersten Referenzteilsequenz 112a, der zweiten Referenzteilsequenz 112b und der zweiten Referenzsequenz 114 sowie des Datenblocks zwischen der ersten Referenzsequenz 112 und der zweiten Referenzsequenz 114, z. B. des zweiten Datenblocks 110, wird erreicht, dass alle Referenzsequenzen, also die erste Referenzteilsequenz 112a, die zweite Referenzteilsequenz 112b und die zweite Referenzsequenz 114, nach der Modulation dieselben Konstellationspunkte aufweisen. Die komplexe Basisbanddarstellung enthält daher drei identische Referenzsequenzabschnitte bzw. Trainingssequenzabschnitte.

Zur einfachen Implementierung in z. B. einen Mikrocontroller kann die Länge der zusammengehörenden Datenblöcke zu einem ganzzahligen Vielfachen von 8 Bit gewählt werden. Die Erweiterung der ML-Sequenzen um ein Bit führt dementsprechend dazu, dass bei einem Ausführungsbeispiel eine Trainingssequenz, z. B. die erste Referenzteilsequenz 112a, die zweite Referenzteilsequenz 112b und die zweite Referenzsequenz 114, jeweils genau vier Byte lang sind.

Zur Lokalisierung der ersten und zweiten Referenzsequenz 112 und 114 in einem Datenstrom bzw. Empfangsdatenstrom kann der Empfangsdatenstrom mit der bekannten ersten und zweiten Referenzsequenz 112 und 114 korreliert werden. Der Betrag der Korrelationsfunktion weist dabei an der Stelle bzw. zeitlichen Position ein Korrelationspeak auf, der umso höher bzw. größer ist, umso besser der Empfangsdatenstrom mit der bekannten ersten und zweiten Referenzsequenz 112 und 114 übereinstimmt. Je stärker das Signal von einem Rauschen überlagert ist, umso geringer ist der Betrag des Korrelationspeaks. Bei der Korrelation können antipodale ML-Sequenzen verwendet werden, die die Eigenschaft besitzen, dass sich das Ergebnis der Korrelationsfunktion einer Delta-Funktion (Korrelationspeak) annähert, wenn eine ML-Sequenz mit einer periodisch fortgesetzten Version der selben ML-Sequenz korreliert wird, also eine sogenannte periodische Autokorrelationsfunktion vorliegt. Antipodale Sequenzen s können durch folgende Abbildung aus binären Sequenzen x erzeugt werden:
x_k=0 wird zu s_k=-1 und
x_k=1 wird zu s_k=+1.
Bei Ausführungsbeispielen ist es somit möglich, das Datenpaket 102 mittels der ersten und zweiten Referenzsequenz 112 und 114 "im Rauschen", also bei einem geringen Signalrauschverhältnis, zu detektieren.

Fig. 3a zeigt eine schematische Ansicht einer Verteilung von Korrelationspeaks einer Korrelation von drei ML-Sequenzen mit dem Empfangsdatenstrom, wobei die dritte der drei ML-Sequenzen abgetrennt ist, während Fig. 3b eine schematische Ansicht einer Verteilung von Korrelationspeaks einer Korrelation von drei aufeinander folgenden ML-Sequenzen mit dem Empfangsdatenstrom zeigt, wobei auf der Abszisse die Zeit und auf der Ordinate der normierte Betrag der Korrelationsfunktion aufgetragen ist.

Durch die Aufteilung der Referenzsequenz in eine erste Referenzsequenz 112 und eine zweite Referenzsequenz 114, die mittels eines Datenblocks voneinander getrennt sind, ergeben sich bei der Synchronisation im Datenempfänger für die Korrelationsfunktion, im Vergleich zu nur einer Referenzsequenz, betragsmäßig kleinere Nebenpeaks N1 bis N6. Darüber hinaus weisen die Nebenpeaks N1 bis N6 untereinander den gleichen (z. B. normierten) Betrag bzw. die gleiche Amplitude auf. Bei der in Fig. 3a gezeigten Verteilung von Korrelationspeaks weisen alle Nebenpeaks N1 bis N6 einen Betrag von "1" auf, während der Hauptpeak H einen Betrag von "3" aufweist. Ohne die Abtrennung der zweiten Referenzsequenz 114 würden die Nebenpeaks N1 bis N6 einen zum Hauptpeak H hin steigenden Betrag aufweisen, wie es in Fig. 3b dargestellt ist. Der Betrag steigt, ausgehend von den Nebenpeaks N1 und N4 mit dem Betrag von "1", auf einen Betrag von "2" bei den Nebenpeaks N2 und N3, während der Hauptpeak H ebenfalls einen Betrag von "3" aufweist. Dies kann die Identifikation des Hauptpeaks H insbesondere bei Rauschen, also bei einem schlechten Signalrauschverhältnis, erschweren.

Ferner besitzt der Hauptpeak H bei der in Fig. 3a gezeigten Verteilung von Korrelationspeaks die dreifache Höhe bezogen auf die Nebenpeaks N1 bis N6. Durch die erfindungsgemäße Anordnung der ersten und zweiten Referenzsequenz 112 und 114 lässt sich somit im Datenempfänger der Hauptpeak H leichter durch Setzen eines Schwellenwertes von den Nebenpeaks N1 bis N6 unterscheiden bzw. trennen. So kann der Schwellenwert für die in Fig. 3a gezeigte Verteilung von Korrelationspeaks z. B. auf den Wert "zwei" gesetzt bzw. festgelegt werden, während für die in Fig. 3b gezeigte Verteilung von Korrelationspeaks ein Schwellenwert mit dem Wert "2" bereits durch die Nebenpeaks N3 und N4 erreicht wird. Für die in Fig. 3 gezeigte Verteilung von Korrelationspeaks müsste der Schwellenwert z. B. auf den Wert "2,5" gesetzt bzw. festgelegt werden, was einen um den Faktor 1,25 höheren Schwellenwert zur Folge hätte.

Durch die Verwendung von drei ML-Sequenzen der Länge m können darüber hinaus resultierende Referenzsequenzen mit Längen erzeugt werden, die nicht durch zwei teilbar sind. Wird beispielsweise eine Trainingssequenz bzw. Referenzsequenz benötigt, die länger ist als 127 Bit (entsprechend 2⁷-1), so wäre die nächstlängere ML-Sequenz schon 255 Bit (entsprechend 2⁸-1) lang. Durch die Verwendung von drei ML-Sequenzen der Länge 63 (entsprechend 2⁶-1) entsteht eine resultierende Referenzsequenz der Länge 189, also eine Länge, die in der Mitte der 127 Bit und 255 Bit langen ML-Sequenzen liegt. Durch die Aufteilung der Referenzsequenz verhält sich diese ähnlich einer gedachten ML-Sequenz der Längen 3*m mit einem Korrelationspeak bzw. Hauptpeak H und kleinen Nebenpeaks N1 bis N6.

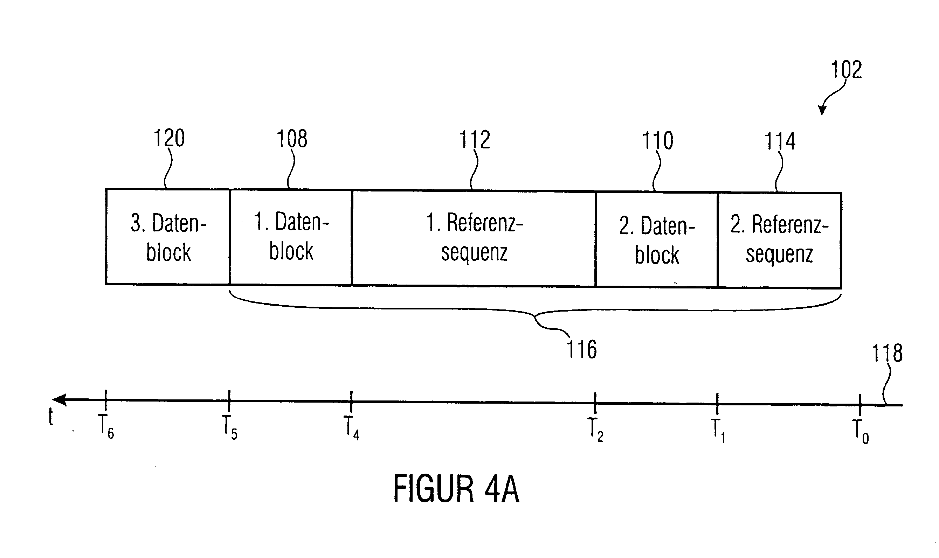

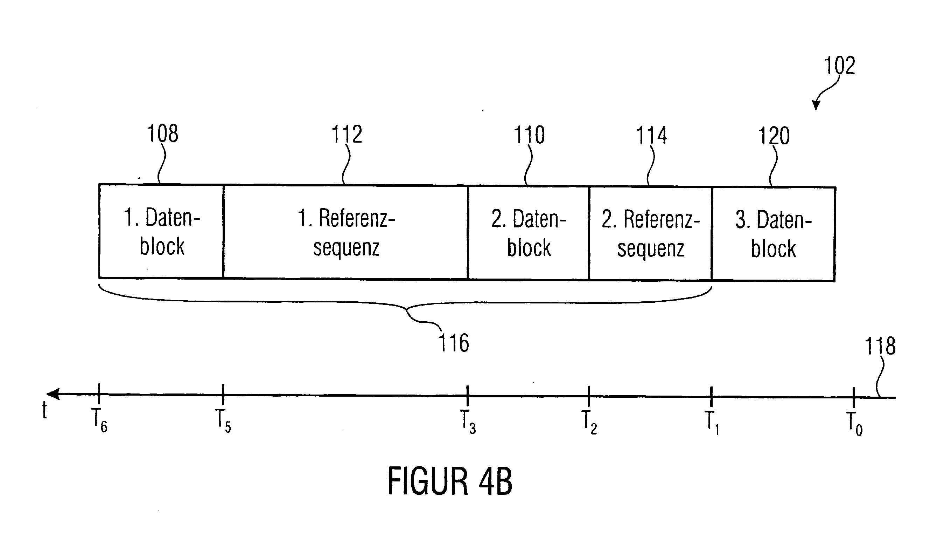

Fig. 4a und 4b zeigen in einer schematischen Ansicht für zwei Ausführungsbeispiele der von dem Datensender 100 gesendeten Datenpakete 102, wobei die Datenpakete 102 jeweils einen dritten Datenblock aufweisen. Die in den Fig. 4a und 4b gezeigten Datenpakete 102 entsprechen somit dem Datenpaket 102 aus Fig. 2a, welches einen zusätzlichen dritten Datenblock 120 aufweist. Die Einrichtung 104 zum Erzeugen eines Datenpakets 102 kann dabei ausgebildet sein, um in dem Datenpaket 102 einen dritten Datenblock vorzusehen.

Der dritte Datenblock 120 kann sich dabei in dem Datenpaket 102, wie in Fig. 4a gezeigt, an einem Datenpaketende zwischen den Zeitpunkten T₅ und T₆ befinden, während sich der aus Fig. 2a bekannte Teil des Datenpakets 102 von dem Zeitpunkt T₀ bis T₅ erstreckt. Alternativ kann sich der dritte Datenblock 120 in dem Datenpaket 102 an einem Datenpaketanfang zwischen den Zeitpunkten T₀ bis T₁ befinden. Dementsprechend befindet sich die zweite Referenzsequenz 114 zwischen den Zeitpunkten T₁ und T₂ und der Datenpaketkernbereich 116 erstreckt sich von dem Zeitpunkt T₂ bis T₆. Ferner kann die Einrichtung 104 zum Erzeugen des Datenpakets 102 ausgebildet sein, um in dem Datenpaket n weitere Datenblöcke vorzusehen. Die n Datenblöcke können dabei, ausgehend vom Datenpaketkernbereich 116, mit steigenden Werten von n vom Datenpaketkernbereich 116 weg, auf der Zeitachse 118 rechts, links oder abwechselnd rechts und links von dem Datenpaketkernbereich 116 und der zweiten Referenzsequenz 114 angeordnet werden.

Fig. 5 zeigt eine schematische Ansicht eines Ausführungsbeispiels für ein Verfahren zum Erzeugen eines Datenpakets 102 aus einem ersten Basisdatenblock 124 und einem zweiten Basisdatenblock 126. In einem ersten Schritt können der erste Datenblock 108 und der zweite Datenblock 110 von dem ersten Basisdatenblock 124 abgeleitet werden und in dem Datenpaket 102 auf der Zeitachse 118 rechts und links von der ersten Referenzsequenz 112 vorgesehen werden. Die erste Referenzsequenz kann sich dementsprechend in dem in Fig. 5 gezeigten Datenpaket 102 zwischen den Zeitpunkten T₃ und T₅ befinden, während sich der erste Datenblock 108 zwischen den Zeitpunkten T₅ und T₆ und sich der zweite Datenblock 110 zwischen den Zeitpunkten T₂ und T₃ befinden kann. Die zweite Referenzsequenz 114 kann in dem Datenpaket zwischen den Zeitpunkten T₁ und T₂ vorgesehen werden. In einem zweiten Schritt können der dritte Datenblock 120 und der vierte Datenblock 122 von dem zweiten Basisdatenblock 126 abgeleitet werden. Dabei kann der dritte Datenblock 120 zwischen den Zeitpunkten T6 und T7 und der vierte Datenblock zwischen den Zeitpunkten T0 und T1 in dem Datenpaket 102 vorgesehen werden.

Des Weiteren kann die Einrichtung 104 zum Erzeugen des Datenpakets 102 ausgebildet sein, um das in Fig. 5 gezeigte Verfahren durchzuführen. Die Einrichtung zum Erzeugen des Datenpakets 102 kann dabei ausgebildet sein, um den ersten Datenblock 108 und den zweiten Datenblock 110 des Datenpakets 102 von einem ersten Basisdatenblock 124 abzuleiten. Darüber hinaus kann die Einrichtung 104 zum Erzeugen des Datenpakets ausgebildet sein, um einen dritten Datenblock 120 und einen vierten Datenblock 122 von einem zweiten Basisdatenblock 126 abzuleiten, und um den dritten Datenblock 120 und den vierten Datenblock 122 in dem Datenpaket 102 vorzusehen, wobei sich der dritte Datenblock 120 in dem Datenpaket 102 an einem Datenpaketende und sich der vierte Datenblock 122 in dem Datenpaket 102 an einem Datenpaketanfang befindet. Die Einrichtung 104 zum Erzeugen des Datenpakets kann die Basisdatenblöcke, z. B. den ersten Basisdatenblock 124 und den zweiten Basisdatenblock 126, direkt oder in Form von Nutzdaten erhalten. Ferner kann die Einrichtung zum Erzeugen des Datenpakets 102 ausgebildet sein, um die Nutzdaten aufzubereiten, um ein Datenpaket 102 mit entsprechenden Datenblöcken zu erhalten.

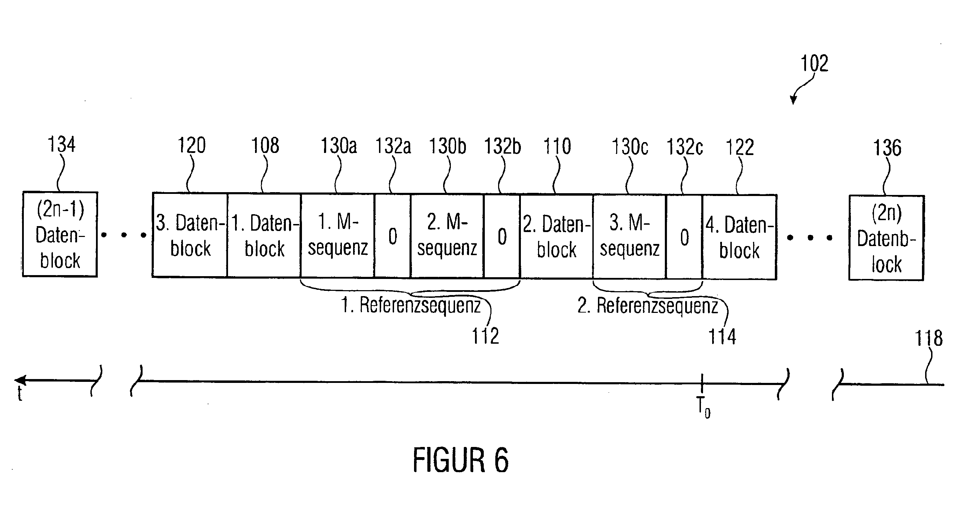

Fig. 6 zeigt eine schematische Ansicht eines alternativen Ausführungsbeispiels eines vom Datensender 100 gesendeten Datenpakets 102, wobei die erste Referenzsequenz 112 zwei ML-Sequenzen 130a und 130b mit jeweils einem Binärenelement 132a und 132b und die zweite Referenzsequenz 114 eine ML-Sequenz 130c mit einem Binärenelement 132c aufweist. Die erste Referenzsequenz 112 ist somit in eine erste Referenzteilsequenz 112a und eine zweite Referenzteilsequenz 112b unterteilt, die der zweiten Referenzsequenz 114 gleich sind. Den drei ML-Sequenzen 130a bis 130c ist jeweils ein binäres Element 132a bis 132c angefügt, wobei in dem in Fig. 6 gezeigten Datenpaket 102 das Binärelement 132a bis 132c jeweils eine binäre Null ist. Alternativ kann das Binärelement 132a bis 132c z. B. eine binäre Eins sein und/oder der jeweiligen ML-Sequenz 130a bis 130c zeitlich vorangehen.

Ferner kann die Einrichtung 104 zum Erzeugen des Datenpakets 102 ausgebildet sein, um weitere (2*n) Datenblöcke in dem Datenpaket 102 vorzusehen, so dass das in Fig. 6 gezeigte Datenpaket 102 (2*n) weitere Datenblöcke aufweist. Dabei kann ein (2*n-1)-ter Datenblock 134 und ein (2*n)-ter Datenblock 136 von einem n-ten Basisdatenblock abgeleitet werden, wobei sich der (2*n-1)-te Datenblock 134 in dem Datenpaket 102 an dem Datenpaketende und sich der (2*n)-te Datenblock 136 in den Datenpaket 102 am Datenpaketanfang befindet (oder umgekehrt). Es sei noch darauf hingewiesen, dass die Einrichtung zum Erzeugen des Datenpakets 102, wie bereits anhand Fig. 4a beschrieben, ausgebildet sein kann, um ein Datenpaket mit n Datenblöcken zu erzeugen.

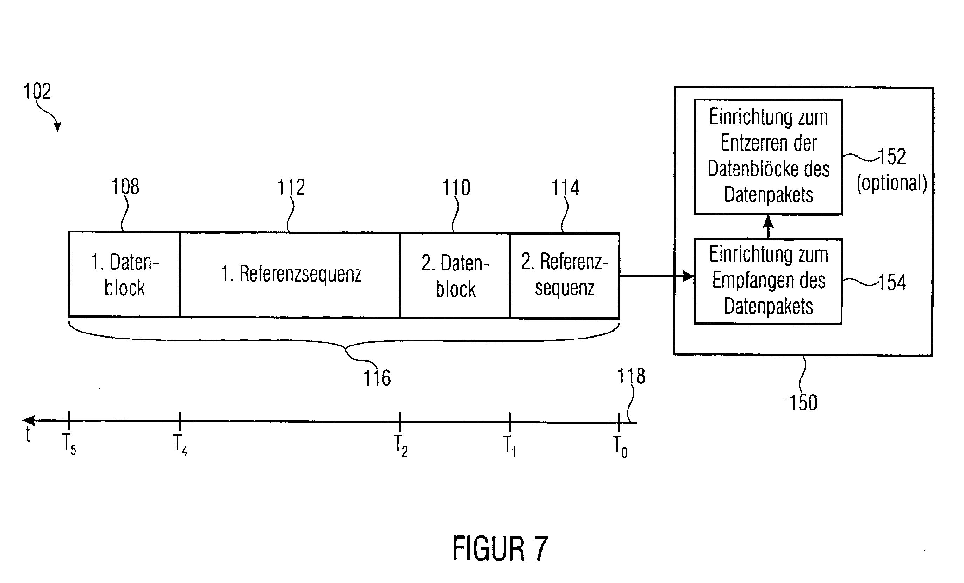

Fig. 7 zeigt eine schematische Ansicht eines Ausführungsbeispiels eines Datenempfängers 150 sowie eines von dem Datenempfänger 150 empfangenen Datenpakets 102. Der Datenempfänger 150 ist ausgebildet, um ein Datenpaket von einem Datensender 100 über einen Kommunikationskanal zu empfangen. Das Datenpaket 102 weist dabei einen ersten Datenblock 108 und einen zweiten Datenblock 110 und eine vorgegebene erste Referenzsequenz 112 und zweite Referenzsequenz 114 zur Synchronisierung des Datenempfängers 150 und zur Entzerrung des empfangenen und durch den Kommunikationskanal gestörten Datenpakets auf, wobei sich in dem Datenpaket 102 der zweite Datenblock 110 zwischen der ersten Referenzsequenz 112 und der zweiten Referenzsequenz 114 und sich die erste Referenzsequenz 112 zwischen dem ersten Datenblock 108 und dem zweiten Datenblock 110 befindet. Der Datenempfänger 150 weist eine Einrichtung 152 zum Empfangen des Datenpakets 102 auf, die ausgebildet ist, um die erste Referenzsequenz 112 und die zweite Referenzsequenz 114 des Datenpakets 102 in dem Empfangsdatenstrom zu lokalisieren, und um das Datenpaket 102 basierend auf einem ermittelbaren Übertragungsparameter, der aus der ersten Referenzsequenz 112 und der zweiten Referenzsequenz 114 ableitbar ist, zu ermitteln. Der Übertragungsparameter kann dabei eine Frequenz, eine Frequenzverschiebung, eine Phase, eine Phasenverschiebung, eine Gruppenlaufzeit oder eine frequenzabhängige Dämpfung des Kommunikationskanals sein.

Die Einrichtung 154 zum Empfangen des Datenpakets 102 kann den Empfangsdatenstrom über eine Schnittstelle, z. B. eine Antenne, empfangen, wobei die Einrichtung 154 zum Empfangen des Datenpakets 102 ausgebildet ist, um das Datenpaket 102 bzw. insbesondere die erste Referenzsequenz 112 und die zweite Referenzfrequenz 114 des Datenpakets 102 in dem Empfangsdatenstrom zu lokalisieren.

Bei einem Ausführungsbeispiel kann die Einrichtung 154 zum Empfangen des Datenpakets 102 ausgebildet sein, um den Empfangsdatenstrom mit der ersten Referenzsequenz 112 und der zweiten Referenzsequenz 114, die dem Datenempfänger 150 bekannt sind, zu korrelieren, um die erste Referenzsequenz 112 und die zweite Referenzsequenz 114 des Datenpakets 102 in dem Empfangsdatenstrom zu lokalisieren. Ferner kann nach der Lokalisation der ersten Referenzsequenz 112 und der zweiten Referenzsequenz 114 das Datenpaket 102 basierend auf einem ermittelbaren Übertragungsparameter ermittelt bzw. erhalten werden. Des Weiteren kann die Einrichtung 154 zum Empfangen des Datenpakets ausgebildet sein, um den Übertragungsparameter basierend auf einer Frequenzschätzung oder einer Phasenschätzung zu ermitteln. Bei Ausführungsbeispielen kann der Übertragungsparameter somit eine Frequenz bzw. Trägerfrequenz, mit dem das Datenpaket 102 über den Kommunikationskanal von dem Datensender 100 zu dem Datenempfänger 150 übertragen wurde, oder eine Phase bzw. Phasenverschiebung zwischen Datensender 100 und Datenempfänger 150 sein.

Zur Synchronisierung mit dem Datenpaket 102, kann der Datenempfänger 150 somit die erste Referenzsequenz 112 und die zweite Referenzsequenz 114 in dem Empfangsdatenstrom lokalisieren, und z. B. basierend auf einem Vergleich zwischen der empfangenen ersten und zweiten Referenzsequenz und der bekannten ersten und zweiten Referenzsequenz 112 und 114 den Übertragungsparameter, z. B. eine Trägerfrequenz mittels der das Datenpaket 102 über den Kommunikationskanal übertragen wurde, ermitteln.

Der erfindungsgemäße Datensender 100 bzw. Datenempfänger 150 bietet insbesondere Vorteile bei Funkübertragungssystemen, bei denen bei niedrigen Signalrauschverhältnissen Datenpakete 102 detektiert, aber nicht zwangsweise auch vollständig decodiert werden müssen. Dies ist z. B. bei Funkübertragungssystemen mit Code Combining der Fall, bei denen Nutzdaten unterschiedlich codiert und zu unterschiedlichen Zeitpunkten als Datenpakete 102 ausgesendet werden. Im Datenempfänger 150 kann durch die Kombination der unterschiedlich codierten Datenpakete 102 ein hoher Codegewinn resultieren, d.h. die Nutzinformation kann bei sehr geringen Signalrauschverhältnissen noch decodiert werden. Damit dies möglich ist, müssen die burstartigen Datenpakete 102 im Empfangsdatenstrom gefunden bzw. lokalisiert werden, d.h. der Datenempfänger 150 muss sich auf ein empfangenes Datenpaket synchronisieren und Kanaleffekte entzerren können.

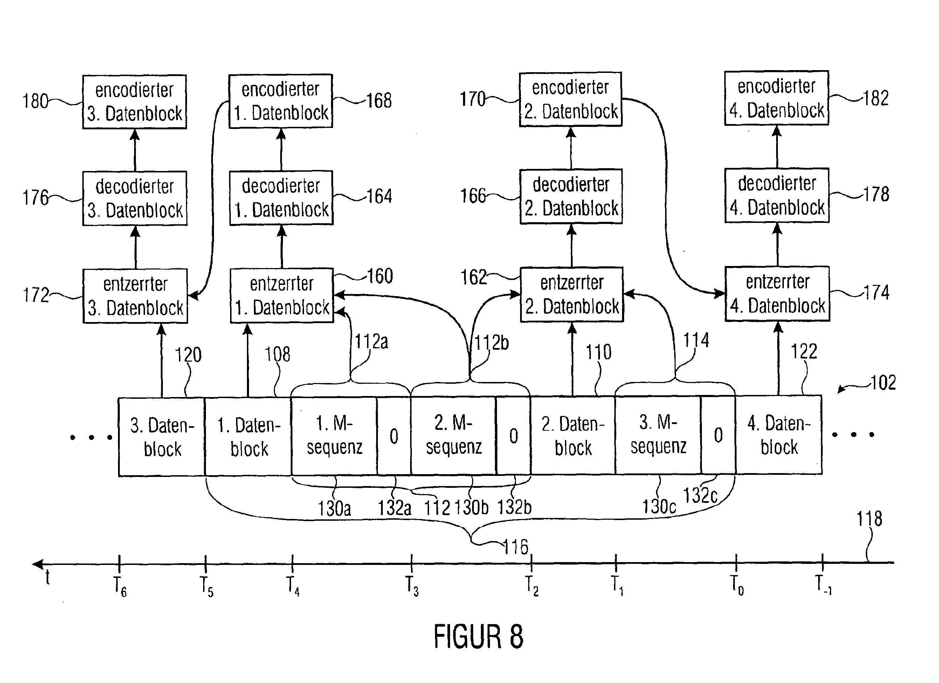

Der Datenempfänger 150 kann ferner eine Einrichtung 152 zum Entzerren der Datenblöcke des Datenpakets 102 aufweisen, die ausgebildet ist, um eine Entzerrung für den ersten Datenblock 108 basierend auf der ersten Referenzsequenz 112 durchzuführen, um einen entzerrten ersten Datenblock zu erhalten, und um eine Entzerrung für den zweiten Datenblock 110 basierend auf der ersten Referenzfrequenz 112 oder einer dem zweiten Datenblock 110 benachbarten Referenzteilsequenz und der zweiten Referenzsequenz 114 durchzuführen, um eine entzerrten zweiten Datenblock zu erhalten. Die Funktionsweise der Einrichtung 152 zum Entzerren der Datenblöcke des Datenpakets 102 soll nachfolgend in dem in Fig. 8 gezeigten Ausführungsbeispiel näher erläutert werden.

Fig. 8 zeigt eine schematische Ansicht eines Ausführungsbeispiels eines Verfahrens zum Entzerren der Datenblöcke eines Datenpakets 102. Eine Entzerrung kann dabei eine Korrektur einer Frequenzverschiebung, Phasenverschiebung, oder Kanalverzerrung sein, die z. B. bei der Übertragung des Datenpakets 102 über den Kommunikationskanal von dem Datensender 100 zu dem Datenempfänger 150 hervorgerufen wird. Das in Fig. 8 gezeigte Datenpaket 102 entspricht dem Datenpaket 102 aus Fig. 6 bei dem die erste Referenzsequenz 112 in eine erste Referenzteilsequenz 112a und eine zweite Referenzteilsequenz 112b aufgeteilt ist, und wobei die erste Referenzteilsequenz 112a und die zweite Referenzteilsequenz 112b gleich der zweiten Referenzsequenz 114 sind, und wobei die erste Referenzteilsequenz 112a, die zweite Referenzteilsequenz 112b und die zweite Referenzsequenz 114 jeweils eine ML-Sequenz 130a bis 130c sowie ein Binärelement 132a bis 132c aufweisen.

Erfindungsgemäß kann die erste Referenzsequenz 112 und die zweite Referenzsequenz 114 nicht nur für die Synchronisierung des Datenempfängers 150, also für die Lokalisierung der ersten und zweiten Referenzsequenz 112 und 114 in dem Empfangsdatenstrom und für die Ermittlung des Übertragungsparameters, verwendet werden, sondern darüber hinaus auch für die Kanalentzerrung des ersten Basisdatenblocks 124 bzw. des ersten Datenblocks 108 und des zweiten Datenblocks 110. Durch die auseinanderliegenden bzw. mittels eines Datenblocks voneinander getrennten Referenzsequenzen 112 und 114 kann eine Frequenzschätzung mit einem geringen Schätzfehler durchgeführt werden. Ferner kann die Frequenz- und Phasenschätzung oder eine Schätzung eines anderen Übertragungsparameters für den ersten Datenblock 108 und für den zweiten Datenblock 110 separat erfolgen. Somit kann basierend auf der Kenntnis des Übertragungsparameters eine Synchronisierung oder Entzerrung durchgeführt werden.

Die Phasenschätzung für den ersten Datenblock 108 kann über die erste Referenzteilsequenz 112a und die zweite Referenzteilsequenz 112b bzw. über die erste ML-Sequenz 130a mit dem Binärelement 132a und die zweite ML-Sequenz 130b mit dem Binärelement 132b gemittelt werden. Somit steht für die Phasenschätzung des ersten Datenblocks 108 eine lange bekannte Trainingssequenz bzw. Referenzsequenz zur Verfügung, womit eine höhere Schätzgenauigkeit erreicht werden kann. Die Schätzung für den zweiten Datenblock 110 erfolgt unter Verwendung der zweiten Referenzteilsequenz 112b und der zweiten Referenzsequenz 114 bzw. unter Verwendung der zweiten ML-Sequenz 130b mit dem Binärelement 132b und der dritten ML-Sequenz 130c mit dem Binärelement 132c. Auch für die Phasenschätzung des zweiten Datenblocks 110 stehen somit zwei Referenzsequenzen zur Verfügung, wodurch die Schätzgenauigkeit erhöht werden kann.

Für die Decodierung weiterer n Basisdatenblöcke, die geteilt sind und jeweils am Datenpaketanfang und Datenpaketende an das Sendetelegramm bzw. an den Datenpaketkernbereich 116 angefügt sind, ist keine weitere Referenzsequenz zur Entzerrung, sowie Frequenz- und Phasenschätzung erforderlich. Für die Entzerrung des n-ten Basisdatenblocks kann erfindungsgemäß die Information eines korrekt decodierten vorangehenden Basisdatenblocks, z. B. des (n-1)-ten, (n-2)-ten oder (n-3)-ten Basisdatenblocks, verwendet werden, wobei bei einem bevorzugten Ausführungsbeispiel die Information des korrekt decodierten (n-1)-ten (d. h. unmittelbar vorhergehenden) Basisdatenblocks verwendet wird. Alternativ kann auch die Information mehrerer vorangehender korrekt decodierter Basisdatenblöcke verwendet werden. Die Information der Datenblöcke wird somit wieder encodiert und mit der Empfangssequenz verglichen. Aus einer Differenz oder einem Vergleich der encodierten Information zur Empfangssequenz, also des reencodierten bzw. neu encodierten Datenblocks zu dem empfangen Datenblock können die Kanalverzerrungen, z. B. Frequenz- und Phasenverschiebung, bestimmt werden. Dabei sind die einzelnen Datenblöcke für sich codiert und können nach der Decodierung und Encodierung bzw. Reencodierung wieder als Referenz zur Entzerrung weiterer Datenblöcke in dem Datenpaket 102 genutzt werden. Somit besteht die Möglichkeit, die Datenblöcke von der ersten Referenzsequenz 112 beginnend zu decodieren und anschließend wieder zu encodieren bzw. reencodieren. Die encodierten Datenblöcke können als Referenzdaten für die Kanalschätzung, Frequenzschätzung, Phasenschätzung oder SNR-Schätzung verwendet werden. Benachbarte Datenblöcke können daher mit den über der Zeit veränderlichen Parametern decodiert werden. Dieser Aufbau der Slots bzw. der Anordnung der Datenblöcke in dem Datenpaket 102 ermöglicht eine Nachführung der Parameterschätzung über der Zeit und somit eine Anpassung an einen zeitveränderlichen Kanal bzw. Übertragungskanal. Speziell für die Parameterschätzung benötigte bekannte Referenzsequenzen innerhalb der Datenblöcke sind durch den erfindungsgemäßen Aufbau des Datenpakets 102 nicht notwendig.

Bei Ausführungsbeispielen hat eine Fehlerfortpflanzung während der Decodierung und Reencodierung eines Datenpakets 102 mit anschließender Parameterschätzung keine Auswirkungen, da nur fehlerfreie Datenpakete 102 oder Datenblöcke weiterverarbeitet werden. Die Fehlerfreiheit eines Datenpakets 102 oder eines Datenblocks kann z. B. anhand einer CRC-Prüfsumme festgestellt werden. Die CRC-Prüfsumme kann dabei über einen Datenblock, mehrere Datenblöcke oder über das gesamte Datenpaket 102 berechnet werden. Ferner kann jeder Datenblock ein oder mehrere CRC-Bits aufweisen, so dass die Decodierung bereits beim Auftreten eines ersten fehlerhaften Datenblocks abgebrochen werden kann, um z. B. Rechenzeit zu sparen. Ist ein Datenpaket 102 nicht vollständig fehlerfrei decodierbar, kann dieses Datenpaket bei Verwendung von Code Combining mit einem anderen Datenpaket 102 des gleichen Senders, das z. B. zu einem späteren Zeitpunkt ausgesendet wurde, kombiniert werden. Bei kombinierten Datenpaketen 102 kann die Entzerrung und Decodierung ebenfalls iterativ erfolgen. Alternativ können alle korrekt decodierbaren Datenblöcke des Datenpakets 102 sofort verwendet werden, während die nicht korrekt decodierbaren Datenblöcke zwischengespeichert und zu einem späteren Zeitpunkt unter Verwendung von Code Combining bzw. mittels Kombination mit einem weiteren bzw. anderen Datenpaket 102 des gleichen Senders, das z. B. zu einem späteren Zeitpunkt ausgesendet wurde, decodiert werden.

Darüber hinaus ist es möglich, dass Datenblöcke unterschiedlich codiert werden. Es können beispielsweise Datenblöcke, die zeitlich näher an der ersten Referenzsequenz 112 liegen, höher geschützt bzw. mit mehr Redundanz versehen werden, um diese Datenblöcke mit einer höheren Wahrscheinlichkeit ohne Code Combining korrekt decodieren zu können als die von der ersten Referenzsequenz 112 zeitlich weiter entfernten Datenblöcke. Dies kann genutzt werden, um wichtige Informationen schon beim Empfang eines Datenpakets 102 korrekt zu decodieren, ohne auf ein weiteres Datenpaket 102 warten zu müssen, um Code Combining durchführen zu können.

Die Einrichtung 152 zum Entzerren der Datenblöcke des Datenpakets 102 kann ferner ausgebildet sein, um das in Fig. 8 gezeigte oben beschriebene erfindungsgemäße Verfahren durchzuführen. Dabei kann die Einrichtung 152 zum Entzerren der Datenblöcke des Datenpakets 102 ausgebildet sein, um eine Entzerrung für den ersten Datenblock 108 basierend auf der ersten Referenzteilsequenz 112a und der zweiten Referenzteilsequenz 112b durchzuführen, um einen entzerrten ersten Datenblock 160 zu erhalten. Der zweite Datenblock 110 kann basierend auf der zweiten Referenzteilsequenz 112b und der zweiten Referenzsequenz 114 entzerrt werden, um einen entzerrten zweiten Datenblock 162 zu erhalten. Die Entzerrung für den ersten Datenblock 108 und den zweiten Datenblock 110 kann dabei unter Verwendung einer Frequenzschätzung, Phasenschätzung oder Kanalschätzung erfolgen.

Darüber hinaus kann die Einrichtung 152 zum Entzerren der Datenblöcke ausgebildet sein, um den entzerrten ersten Datenblock 160 und zweiten Datenblock 162 zu decodieren, um einen decodierten ersten Datenblock 164 und zweiten Datenblock 166 zu erhalten. Falls der entzerrte erste Datenblock 160 korrekt decodiert werden konnte, falls also der decodierte erste Datenblock 164 eine gültige Information aufweist, so kann diese Information wieder encodiert werden, um als Referenzsequenz für die Entzerrung des dritten Datenblocks 120 verwendet zu werden. Analog kann die Information eines korrekt decodierten zweiten Datenblocks genutzt werden, um einen vierten Datenblock 122 zu entzerren. Des Weiteren kann die Einrichtung 152 zum Entzerren der Datenblöcke ausgebildet sein, um den decodierten ersten Datenblock 164 oder zweiten Datenblock 166 zu encodieren, um einen encodierten ersten Datenblock 168 oder zweiten Datenblock 170 zu erhalten.

Des Weiteren kann die Einrichtung 152 zur Entzerrung der Datenblöcke ausgebildet sein, um eine Entzerrung für einen ersten Datenblock 108 und einen zweiten Datenblock 110 durchzuführen, wobei der erste Datenblock 108 und der zweite Datenblock 110 von einem ersten Basisdatenblock 124 abgeleitet sind.

Zusätzlich kann die Einrichtung zum Entzerren der Datenblöcke des Datenempfängers ausgebildet sein, um den entzerrten ersten Datenblock und zweiten Datenblock zu decodieren, um einen decodierten ersten Datenblock und zweiten Datenblock zu erhalten. Ferner kann die Einrichtung zum Entzerren der Datenblöcke des Datenempfängers ausgebildet sein, um den decodierten ersten Datenblock oder zweiten Datenblock zu encodieren, um einen encodierten ersten Datenblock oder zweiten Datenblock zu erhalten. Eine Entzerrung für einen dritten Datenblock kann basierend auf dem encodierten ersten Datenblock durchgeführt werden, falls der erste Datenblock in dem Datenpaket einen zeitlich geringeren Abstand zu dem dritten Datenblock aufweist als der zweite Datenblock. Alternativ kann eine Entzerrung für den dritten Datenblock basierend auf dem encodierten zweiten Datenblock durchgeführt werden, falls der zweite Datenblock in dem Datenpaket einen zeitlich geringeren Abstand zu dem dritten Datenblock aufweist als der erste Datenblock. Ferner kann eine Entzerrung für einen vierten Datenblock basierend auf dem encodierten ersten Datenblock durchgeführt werden, falls der erste Datenblock in dem Datenpaket einen zeitlich geringeren Abstand zu dem vierten Datenblock aufweist als der zweite Datenblock. Alternativ kann eine Entzerrung für den vierten Datenblock basierend auf dem encodierten zweiten Datenblock durchgeführt werden, falls der zweite Datenblock in dem Datenpaket einen zeitlich geringeren Abstand zu dem vierten Datenblock aufweist als der erste Datenblock. Des Weiteren können der dritte Datenblock und der vierte Datenblock von einem zweiten Basisdatenblock abgeleitet sein, wobei sich der dritte Datenblock in dem Datenpaket an einem Datenpaketende und sich der vierte Datenblock in dem Datenpaket an einem Datenpaketanfang befindet. Die Entzerrung für den dritten Datenblock 120 und den vierten Datenblock 122 kann dabei ebenfalls unter Verwendung einer Frequenzschätzung, Phasenschätzung oder Kanalschätzung erfolgen.

Ferner kann ein entzerrter dritter Datenblock 172 und ein entzerrter vierter Datenblock 174 decodiert werden, um einen decodierten dritten Datenblock 176 und einen decodierten vierten Datenblock 178 zu erhalten. Der decodierte dritte Datenblock 176 und der decodierte vierte Datenblock 178 können anschließend encodiert werden, um einen encodierten dritten Datenblock 180 und einen encodierten vierten Datenblock 182 zu erhalten. Die Einrichtung 152 zum Entzerren der Datenblöcke kann dabei ausgebildet sein, um eine Entzerrung für einen fünften Datenblock (nicht gezeigt) basierend auf dem encodierten dritten Datenblock 180 durchzuführen, und um eine Entzerrung für einen sechsten Datenblock (nicht gezeigt) basierend auf dem encodierten vierten Datenblock 182 durchzuführen.

Eine Entzerrung eines dritten Datenblocks 120 kann entsprechend dem in Fig. 4a oder 4b gezeigten Ausführungsbeispiel eines Datenpakets 102 erfolgen. Die Einrichtung 152 zum Entzerren der Datenblöcke kann dabei ausgebildet sein, um eine Entzerrung für den dritten Datenblock 120 basierend auf dem encodierten ersten Datenblock 168 durchzuführen, falls der erste Datenblock 108 im Datenpaket 102 einen zeitlich geringeren Abstand zu dem dritten Datenblock 120 aufweist als der zweite Datenblock 110, oder um eine Entzerrung für den dritten Datenblock 120 basierend auf dem encodierten zweiten Datenblock 170 durchzuführen, falls der zweite Datenblock 110 im Datenpaket 102 einen zeitlich geringeren Abstand zu dem dritten Datenblock 120 aufweist als der erste Datenblock 108, wobei sich der dritte Datenblock 120 in dem Datenpaket 102 an einem Datenpaketanfang oder Datenpaketende befindet. Die Entzerrung für den dritten Datenblock 120 kann dabei unter Verwendung einer Frequenzschätzung, Phasenschätzung oder Kanalschätzung erfolgen.

Nachfolgend soll das erfindungsgemäße Konzept noch einmal zusammenfassend beschrieben werden.

Die vorliegende Erfindung befasst sich mit der Synchronisation und Entzerrung kanalcodierter Datenpakete 102 in einem Funkübertragungssystem z. B. mit Code Combining. Bei einer Funkübertragung, bei der mit Hilfe von Code Combining die Übertragungssicherheit erhöht werden soll, indem redundante Informationen in mehreren unterschiedlichen Datenpaketen 102 zu unterschiedlichen Zeiten übertragen werden, ist es notwendig, die einzelnen Datenpakete 102 auch dann noch zu detektieren, wenn das Signalrauschverhältnis (SNR) sehr niedrig ist und zur Decodierung des einzelnen Pakets bzw. Datenpakets 102 nicht ausreicht. Je nach Codegewinn durch die Kombination mehrerer Empfangspakete bzw. Datenpakete 102 sinkt das notwendige Signalrauschverhältnis am Empfänger bzw. Datenempfänger 150, bei dem die Daten noch detektiert werden können. Damit dieser Codegewinn realisiert werden kann, müssen die einzelnen Datenpakete 102 bei diesem niedrigen Signalrauschverhältnis auch gefunden werden oder sogar teilweise (wenn auch z. B. falsch) decodiert werden können. Zum Auffinden und zur teilweisen Decodierung der einzelnen Datenpakete 102 ist somit eine Synchronisation und Entzerrung notwendig. Ausführungsbeispiele der Erfindung beschreiben daher ein Verfahren zur Synchronisation einzelner burstartiger Sendepakete bzw. Datenpakete 102 in einem Funkübertragungssystem (z. B. mit Code Combining), ohne dass es zwingend erforderlich ist, das einzelne Paket bzw. Datenpaket 102 vollständig decodieren zu können.

Zur Synchronisation wird die Referenzsequenz bzw. Trainingssequenz aufgeteilt in zwei unterschiedlich große Teile 112 und 114, die von einem Datenblock 110 getrennt sind. Ferner wird ein erster Basisdatenblock 124 mit Hilfe der Trainingssequenz bzw. Referenzsequenz entzerrt, wobei zusätzlich eine Frequenz und Phasenschätzung durch die Trainingssequenz bzw. Referenzsequenz 112 und 114 erfolgen kann. Weitere Basisdatenblöcke werden mit Hilfe des zuvor empfangenen reencodierten Basisdatenblocks entzerrt, wobei eine Frequenz- und Phasenschätzung durch die korrekt empfangenen Daten erfolgen kann.

Zur Synchronisation im Empfänger bzw. Datenempfänger 150 wird üblicherweise eine Trainingssequenz bzw. Referenzsequenz bei der Übertragung eines burstartigen Sendepakets bzw. Datenpakets verwendet. Bei der vorliegenden Erfindung wird die Trainingssequenz bzw. Referenzsequenz wie z. B. in Fig. 6 gezeigt und nachfolgend beschrieben aufgebaut. Die Trainingssequenz bzw. Referenzsequenz wird z. B. in drei identische Teilsequenzen aufgeteilt. Diese Teilsequenzen sind z. B. Maximal-Längen-Sequenzen (ML-Sequenzen) 130a bis 130c der Länge (2^{m}-1), welche um ein Bit verlängert werden (Nullbit) 132a bis 132c. Sie werden nicht sukzessive, sondern in zwei Teilstücken 112 und 114 gesendet. Es werden z. B. zwei ML-Sequenzen 130a und 130b gleicher Länge zusammengefasst und von der dritten ML-Sequenz 130c gleicher Länge durch einen Datenblock 110 bzw. einen Teil eines ersten Basisdatenblocks 124 getrennt. Der zweite Teil des ersten Basisdatenblocks 124 wird auf der anderen Seite des ML-Sequenzpaares angeordnet, so dass sich der Basisdatenblock 124 links und rechts von dem ML-Sequenz-Tupel 130a und 130b befindet. Die Aufteilung des Basisdatenblocks erfolgt dabei z. B. (idealerweise) in zwei gleich große Teile. Eine äquivalente Aufteilung ist dabei nicht zwingend notwendig.

Die Erweiterung der ML-Sequenzen 130a bis 130c um ein Bit wurde vorgenommen, da die Bits z. B. mit einer (2^n)-stufigen Modulation moduliert werden, beispielsweise mit einer (nicht differentiellen) MSK-Modulation. Besteht eine Sequenz aus einer geraden Anzahl von Bits, so wird das dieser Sequenz folgende Bit auf dieselbe Achse des Konstellationsdiagramms abgebildet wie das erste Bit der ersten Sequenz. Durch die gerade Anzahl an Bits in der ersten und zweiten Trainingssequenz bzw. Referenzsequenz 112 und 114 sowie des Datenblocks 110 zwischen den Trainingssequenzen bzw. Referenzsequenzen 112 und 114 wird erreicht, dass alle Trainingssequenzen bzw. Referenzsequenzen 112 und 114 nach der Modulation dieselben Konstellationspunkte aufweisen. Die komplexe Basisbanddarstellung enthält daher drei identische Trainingssequenzabschnitte bzw. Referenzsequenzabschnitte.

Zur einfacheren Implementierung in einen Mikrocontroller wird die Länge der zusammengehörigen Datenblöcke oder Basisdatenblöcke z. B. zu einem ganzzahligen Vielfachen von 8 Bit gewählt. Die Erweiterung der ML-Sequenzen um 1 Bit führt dazu, dass z. B. eine Trainingssequenz genau 4 Byte lang ist.

Durch die Aufteilung der Trainingssequenzen bzw. Referenzsequenzen in zwei von Daten bzw. einem Datenblock 110 getrennte Stücke ergeben sich bei der Synchronisation betragsmäßig kleinere Nebenpeaks im Vergleich zu drei aufeinanderfolgenden Trainingssequenzen. Zudem weisen die Nebenpeaks untereinander den gleichen Betrag auf. Ohne die Abtrennung der letzten Trainingssequenz 114 würden Nebenpeaks steigender Größe entstehen, wie in Fig. 3b zu sehen ist. Fig. 3a zeigt dagegen eine schematische Darstellung der Korrelationsfunktionspeaks mit abgetrennter dritter Trainingssequenz 114. Es ist zu sehen, dass alle Nebenpeaks N1 bis N6 die selben Amplituden aufweisen. Der Hauptpeak H besitzt die dreifache Höhe bezogen auf die Nebenpeaks N1 bis N6. Durch diese Anordnung lässt sich im Empfänger bzw. Datenempfänger 150 der Hauptpeak H leicht durch Setzen eines Schwellenwerts von den Nebenpeaks N1 bis N6 unterscheiden oder trennen.

Durch die Verwendung von drei ML-Sequenzen der Länge (2^{m}-1) kann man auch resultierende Trainingssequenzen bzw. Referenzsequenzen 112 und 114 mit Längen erzeugen, die nicht durch 2 teilbar sind. Wird beispielsweise eine längere Sequenz als 127 Bit (entsprechend 2⁷-1) verwendet, so wäre die nächstlängere ML-Sequenz schon 255 Bit (entsprechend 2⁸-1) lang. Durch die Verwendung von 3 ML-Sequenzen der Länge 63 (entsprechend 2⁶-1) resultiert eine Trainingssequenz bzw. Referenzsequenz der Länge 189, also eine Länge, die in der Mitte der beiden ML-Sequenzlängen liegt. Durch die Aufteilung der Sequenz verhält sich diese ähnlich einer gedachten ML-Sequenz der Länge 3*(2^{m}-1) mit einem Korrelationspeak und kleinen Nebenwerten.

Bei dem erfindungsgemäßen Lösungsansatz wird die Trainingssequenz aufgeteilt, um sie gleichzeitig für die Kanalentzerrung des ersten Basisdatenblocks 124 zu nutzen. Durch die auseinander liegenden Trainingssequenzen bzw. Referenzsequenzen 112 und 114 kann eine Frequenzschätzung mit geringerem Schätzfehler durchgeführt werden. Die Frequenzund Phasenschätzung kann für die beiden Teile des ersten Basisdatenblocks 124, also für den ersten Datenblock 108 und den zweiten Datenblock 110 separat erfolgen.

Die Phasenschätzung für den ersten Datenblock 108 kann über die erste ML-Sequenz 130a und die zweite ML-Sequenz 130b gemittelt werden. Somit steht für die erste Phasenschätzung eine lange bekannte Sequenz 112 zur Verfügung, womit eine höhere Schätzgenauigkeit erreicht werden kann. Die Schätzung für den zweiten Datenblock 110 erfolgt unter Nutzung der zweiten ML-Sequenz 130b und der dritten ML-Sequenz 130c. Auch für diese Phasenschätzung stehen somit 2 Trainingssequenzen bzw. Referenzsequenzen zur Verfügung, wodurch die Schätzgenauigkeit erhöht werden kann. Für die Decodierung weiterer Basisdatenblöcke n, die geteilt sind und jeweils links und rechts an das Sendetelegramm angefügt werden, wird keine weitere Trainingssequenz zur Entzerrung sowie Frequenzund Phasenschätzung verwendet. Für die Entzerrung des n-ten Basisdatenblocks wird die Information des korrekt codierten Basisdatenblocks n-1 verwendet. Diese Information wird wieder encodiert und mit der Empfangssequenz verglichen. Aus der Differenz der encodierten Information zur Empfangssequenz können die Kanalverzerrungen und Frequenz-und Phasenverschiebung bestimmt werden. Dabei sind die einzelnen Datenblöcke für sich codiert und können nach der Decodierung und Reencodierung wieder als Referenz zur Entzerrung weiterer Datenblöcke in dem Datenpaket 102 genutzt werden. Somit besteht die Möglichkeit, die Datenblöcke von der ML-Sequenz beginnend zu decodieren und anschließend wieder zu reencodieren. Die n-codierten Blöcke können als Referenzdaten für die Kanalschätzung, Frequenzschätzung, Phasenschätzung oder SNR-Schätzung verwendet werden.

Benachbarte Datenblöcke können dabei mit den über der Zeit veränderlichen Parametern decodiert werden. Dieser Aufbau der Slots ermöglicht eine Nachführung der Parameterschätzung über der Zeit und somit eine Anpassung an einen zeitveränderlichen Kanal. Speziell für die Parameterschätzung benötigte bekannte Trainingsfolgen bzw. Referenzsequenzen innerhalb der Datenblöcke sind durch diesen Datenpaketaufbau nicht notwendig. Eine Fehlerfortpflanzung während der Decodierung und Reencodierung eines Datenpakets 102 mit anschließender Parameterschätzung hat in diesem System keine Auswirkungen, da nur fehlerfreie Datenpakete 102 weiterverarbeitet werden. Ist ein Datenpaket 102 nicht vollständig fehlerfrei decodierbar, kann dieses Datenpaket 102 bei Verwendung von Code Combining mit einem anderen Datenpaket 102 des gleichen Senders bzw. Datensenders 100, das zu einem späteren Zeitpunkt ausgesendet wurde, kombiniert werden (Code Combining). Bei diesen kombinierten Datenpaketen 102 kann die Entzerrung und Decodierung dann ebenfalls iterativ erfolgen.

Weiterhin ist es möglich, dass Datenblöcke unterschiedlich codiert werden. Es könnten beispielsweise Datenblöcke, die näher an der Trainingssequenz bzw. Referenzsequenz liegen, höher geschützt werden, um diese Daten mit einer höheren Wahrscheinlichkeit ohne Code Combining korrekt zu decodieren als die äußeren Daten. Dies kann genutzt werden, um wichtige Informationen schon beim Empfang eines Datenpakets 102 korrekt zu decodieren, ohne auf ein weiteres Datenpaket 102 warten zu müssen, um Code Combining durchführen zu können. Das beschriebene Verfahren erlaubt es durch die besondere Aufteilung der Trainingssequenz sowohl eine gute Phasen- und Frequenzschätzung zur Kanalentzerrung zu erreichen und gleichzeitig gute Korrelationseigenschaften damit zu erzielen, um Datenpakete 102 insbesondere bei Funkübertragungssystemen mit Code Combining aus dem Rauschen heraus zu detektieren, auch wenn sie nur teilweise decodierbar sind. Durch die iterative Decodierung ist es möglich, die Phasen- und Frequenzschätzung beginnend von der Trainingssequenz in der Mitte des Datenpakets 102 nach außen iterativ nachzuführen. Dazu werden die eigentlichen Daten als Trainingssequenz verwendet.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden?. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird. Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein. Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden. Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen. Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sind.

## Patentansprüche

1. Datensender (100) zum Senden eines Datenpakets (102) über einen Kommunikationskanal zu einem Datenempfänger, mit folgenden Merkmalen:
einer Einrichtung (104) zum Erzeugen des Datenpakets (102) mit einem ersten Datenblock (108) und einem zweiten Datenblock (110) und einer-vorgegebenen ersten Referenzsequenz (112) und zweiten Referenzsequenz (114) zur Synchronisation des Datenpakets im Datenempfänger, wobei die erste Referenzsequenz (112) länger ist als die zweite Referenzsequenz (114), und wobei sich in dem Datenpaket der zweite Datenblock (110) zwischen der ersten Referenzsequenz (112) und der zweiten Referenzsequenz (114) und sich die erste Referenzsequenz (112) zwischen dem ersten Datenblock (108) und dem zweiten Datenblock (110) befindet; und
einer Einrichtung (106) zum Senden des Datenpakets (102) über den Kommunikationskanal an den Datenempfänger;
wobei der Datensender **dadurch gekennzeichnet ist, daß** die Einrichtung (104) zum Erzeugen des Datenpakets (102) ausgebildet ist, um in dem Datenpaket (102) die erste Referenzsequenz (112) doppelt so lang wie die zweite Referenzsequenz (114) vorzusehen; und
die Einrichtung (104) zum Erzeugen des Datenpakets (102) ausgebildet ist, um in dem Datenpaket (102) die erste Referenzsequenz (112) in eine erste Referenzteilsequenz (112a) und eine zweite Referenzteilsequenz (112b) zu unterteilen, wobei die erste Referenzteilsequenz (112a) und die zweite Referenzteilsequenz (112b) jeweils die Länge der zweiten Referenzsequenz (114) aufweisen.

2. Datensender (100) nach Anspruch 1, wobei die Einrichtung (104) zum Erzeugen des Datenpakets (102) ausgebildet ist, um ein Datenpaket (102) zu erzeugen, in dem die erste Referenzteilsequenz (112a), die zweite Referenzteilsequenz (112b) und die zweite Referenzsequenz (114) gleich sind.

3. Datensender (100) nach einem der vorhergehenden Ansprüche, wobei die Einrichtung (104) zum Erzeugen des Datenpakets (102) ausgebildet ist, um in dem Datenpaket (102) die erste Referenzsequenz (112) und die zweite Referenzsequenz (114) als pseudozufällige Sequenzen oder, Maximum-Length, ML-Sequenzen vorzusehen.

4. Datensender (100) nach Anspruch 2, wobei die Einrichtung (104) zum Erzeugen des Datenpakets (102) ausgebildet ist, um in dem Datenpaket (102) die erste Referenzteilsequenz (112a), die zweite Referenzteilsequenz (112b) und die zweite Referenzsequenz (114) jeweils als, Maximum-Length, ML-Sequenz (130) mit einem zusätzlichen Binärelement (132) vorzusehen.

5. Datensender (100) nach einem der vorhergehenden Ansprüche, wobei die Einrichtung (104) zum Erzeugen des Datenpakets (102) ausgebildet ist, um in dem Datenpaket (102) einen dritten Datenblock (120) vorzusehen, wobei sich der dritte Datenblock (120) in dem Datenpaket (102) an einem Datenpaketanfang oder Datenpaketende befindet.

6. Datensender (100) nach einem der vorhergehenden Ansprüche, wobei die Einrichtung (104) zum Erzeugen des Datenpakets (102) ausgebildet ist, um den ersten Datenblock (108) und den zweiten Datenblock (110) des Datenpakets (102) von einem ersten Basisdatenblock (124) abzuleiten.

7. Datensender (100) nach Anspruch 6, wobei die Einrichtung (104) zum Erzeugen des Datenpakets (102) ausgebildet ist, um einen dritten Datenblock (120) und einen vierten Datenblock (122) von einem zweiten Basisdatenblock (126) abzuleiten, und um den dritten Datenblock (120) und den vierten Datenblock (122) in dem Datenpaket (102) vorzusehen, wobei sich der dritte Datenblock (120) in dem Datenpaket (102) an einem Datenpaketende und sich der vierte Datenblock (122) in dem Datenpaket (102) an einem Datenpaketanfang befindet.

8. Datenempfänger (150) zum Empfangen eines Datenpakets (102) von einem Datensender über einen Kommunikationskanal, wobei das Datenpaket (102) einen ersten Datenblock (108) und einen zweiten Datenblock (110) und eine vorgegebene erste Referenzsequenz (112) und zweite Referenzsequenz (114) zur Synchronisierung des Datenempfängers (150) aufweist, wobei sich in dem Datenpaket (102) der erste Datenblock (110) zwischen der ersten Referenzsequenz (112) und der zweiten Referenzsequenz (114) und sich die erste Referenzsequenz (112) zwischen dem ersten Datenblock (108) und dem zweiten Datenblock (110) befindet, wobei die erste Referenzsequenz (112) doppelt so lang ist wie die zweite Referenzsequenz (114), und wobei die erste Referenzsequenz (112) in eine erste Referenzteilsequenz (112a) und eine zweite Referenzteilsequenz (112b) unterteilt ist, wobei die erste Referenzteilsequenz (112a) und die zweite Referenzteilsequenz (112b) jeweils die Länge der zweiten Referenzsequenz (114) aufweisen, mit einer Einrichtung (154) zum Empfangen des Datenpakets (102), die ausgebildet ist, um die erste Referenzsequenz (112) und die zweite Referenzsequenz (114) des Datenpakets (102) in dem Empfangsdatenstrom zu lokalisieren, und um das Datenpaket (102) basierend auf einem ermittelbaren Übertragungsparameter, der aus der ersten Referenzsequenz (112) und der zweiten Referenzsequenz (114) ableitbar ist, zu ermitteln.

9. Datenempfänger (150) nach Anspruch 8, wobei die Einrichtung (154) zum Empfangen des Datenpakets (102) ausgebildet ist, um den Empfangsdatenstrom mit der ersten Referenzsequenz (112) und der zweiten Referenzsequenz (114), die dem Datenempfänger (150) bekannt sind, zu korrelieren, um die erste Referenzsequenz (112) und die zweite Referenzsequenz (114) des Datenpakets (102) in dem Empfangsdatenstrom zu lokalisieren.

10. Datenempfänger (150) nach Anspruch 8 oder 9, wobei die Einrichtung (154) zum Empfangen des Datenpakets (102) ausgebildet ist, um basierend auf einer Frequenzschätzung oder einer Phasenschätzung den Übertragungsparameter zu ermitteln.

11. Datenempfänger (150) nach einem der Ansprüche 8 bis 10, der ferner eine Einrichtung (152) zum Entzerren der Datenblöcke des Datenpakets (102) aufweist, die ausgebildet ist, um eine Entzerrung für den ersten Datenblock (108) basierend auf der ersten Referenzsequenz (112) durchzuführen, um einen entzerrten ersten Datenblock (160) zu erhalten, und um eine Entzerrung für den zweiten Datenblock (110) basierend auf der ersten Referenzsequenz (112) oder einem dem zweiten Datenblock (110) benachbarten Referenzteilsequenz und der zweiten Referenzsequenz (114) durchzuführen, um einen entzerrten zweiten Datenblock (162) zu erhalten.

12. Datenempfänger (150) nach Anspruch 11, wobei die Einrichtung (152) zum Entzerren der Datenblöcke ausgebildet ist, um die Entzerrung für den ersten Datenblock (108) und den zweiten Datenblock (110) unter Verwendung einer Frequenzschätzung, Phasenschätzung oder Kanalschätzung durchzuführen.

13. Datenempfänger (150) nach Anspruch 11 oder 12, wobei die Einrichtung (152) zum Entzerren der Datenblöcke ausgebildet ist, um den entzerrten ersten Datenblock (160) und zweiten Datenblock (162) zu decodieren, um einen decodierten ersten Datenblock (164) und zweiten Datenblock (166) zu erhalten.

14. Datenempfänger (150) nach einem der Ansprüche 11 bis 13, wobei die Einrichtung (152) zum Entzerren der Datenblöcke ausgebildet ist, um den decodierten ersten Datenblock (164) oder zweiten Datenblock (166) zu encodieren, um einen encodierten ersten Datenblock (168) oder zweiten Datenblock (170) zu erhalten

15. Datenempfänger (150) nach einem der Ansprüche 11 bis 14, wobei die Einrichtung (152) zum Entzerren der Datenblöcke ausgebildet ist, um eine Entzerrung für einen dritten Datenblock (120) basierend auf dem encodierten ersten Datenblock (168) durchzuführen, falls der erste Datenblock (108) in dem Datenpaket (102) einen zeitlich geringeren Abstand zu dem dritten Datenblock (120) aufweist als der zweite Datenblock (110), oder um eine Entzerrung für den dritten Datenblock (120) basierend auf dem encodierten zweiten Datenblock (170) durchzuführen, falls der zweite Datenblock (110) in dem Datenpaket (102) einen zeitlich geringeren Abstand zu dem dritten Datenblock (120) aufweist als der erste Datenblock (108), wobei sich der dritte Datenblock (120) in dem Datenpaket (102) an einem Datenpaketanfang oder Datenpaketende befindet.

16. Datenempfänger (150) nach Anspruch 15, wobei die Einrichtung (152) zum Entzerren der Datenblöcke ausgebildet ist, um die Entzerrung für den dritten Datenblock (120) unter Verwendung einer Frequenzschätzung, Phasenschätzung oder Kanalschätzung durchzuführen.

17. Datenempfänger (150) nach einem der Ansprüche 11 bis 14, wobei die Einrichtung (152) zum Entzerren der Datenblöcke ausgebildet ist, um eine Entzerrung für einen ersten Datenblock (108) und einen zweiten Datenblock (110) durchzuführen, wobei der erste Datenblock (108) und der zweite Datenblock (110) von einem ersten Basisdatenblock (124) abgeleitet sind.

18. Datenempfänger (150) nach Anspruch 17, wobei die Einrichtung (152) zum Entzerren der Datenblöcke ausgebildet ist, um eine Entzerrung für einen dritten Datenblock (120) basierend auf dem encodierten ersten Datenblock (168) durchzuführen, falls der erste Datenblock (108) in dem Datenpaket (102) einen zeitlich geringeren Abstand zu dem dritten Datenblock (120) aufweist als der zweite Datenblock (110), oder um eine Entzerrung für den dritten Datenblock (120) basierend auf dem encodierten zweiten Datenblock (170) durchzuführen, falls der zweite Datenblock (110) in dem Datenpaket (102) einen zeitlich geringeren Abstand zu dem dritten Datenblock (120) aufweist als der erste Datenblock (108), und um eine Entzerrung für einen vierten Datenblock (122) basierend auf dem encodierten ersten Datenblock (168) durchzuführen, falls der erste Datenblock (108) in dem Datenpaket (102) einen zeitlich geringeren Abstand zu dem vierten Datenblock (122) aufweist als der zweite Datenblock (110), oder um eine Entzerrung für den vierten Datenblock (122) basierend auf dem encodierten zweiten Datenblock (170) durchzuführen, falls der zweite Datenblock (110) in dem Datenpaket (102) einen zeitlich geringeren Abstand zu dem vierten Datenblock (122) aufweist als der erste Datenblock (108), wobei der dritte Datenblock (120) und der vierte Datenblock (122) von einem zweiten Basisdatenblock (126) abgeleitet sind, wobei sich der dritte Datenblock (120) in dem Datenpaket (102) an einem Datenpaketende und sich der vierte Datenblock (122) in dem Datenpaket (102) an einem Datenpaketanfang befindet.

19. Datenempfänger (150) nach Anspruch 18, wobei die Einrichtung (152) zum Entzerren der Datenblöcke ausgebildet ist, um die Entzerrung für den dritten Datenblock (120) und den vierten Datenblock (122) unter Verwendung einer Frequenzschätzung, Phasenschätzung oder Kanalschätzung durchzuführen.

20. Verfahren zum Senden eines Datenpakets über einen Kommunikationskanal zu einem Datenempfänger, mit folgenden Schritten:
Erzeugen des Datenpakets mit einem ersten Datenblock und einem zweiten Datenblock und einer vorgegebenen ersten Referenzsequenz und zweiten Referenzsequenz zur Synchronisation des Datenempfängers, wobei die erste Referenzsequenz länger ist als die zweite Referenzsequenz, und wobei sich in dem Datenpaket der erste Datenblock zwischen der ersten Referenzsequenz und der zweiten Referenzsequenz und sich die erste Referenzsequenz zwischen dem ersten Datenblock und dem zweiten Datenblock befindet wobei das Verfahren **dadurch gekennzeichnet ist, daß** die erste Referenzsequenz doppelt so lang ist wie die zweite Referenzsequenz, und wobei die erste Referenzsequenz in eine erste Referenzteilsequenz und eine zweite Referenzteilsequenz unterteilt ist, wobei die erste Referenzteilsequenz und die zweite Referenzteilsequenz jeweils die Länge der zweiten Referenzsequenz aufweisen; und
Senden des Datenpakets über den Kommunikationskanal an den Datenempfänger.

21. Verfahren zum Empfangen eines Datenpakets von einem Datensender über einen Kommunikationskanal, wobei das Datenpaket einen ersten Datenblock und einen zweiten Datenblock und eine vorgegebene erste Referenzsequenz und zweite Referenzsequenz zur Synchronisierung des Datenempfängers aufweist, wobei sich in dem Datenpaket der erste Datenblock zwischen der ersten Referenzsequenz und der zweiten Referenzsequenz und sich die erste Referenzsequenz zwischen dem ersten Datenblock und dem zweiten Datenblock befindet, wobei die erste Referenzsequenz doppelt so lang ist wie die zweite Referenzsequenz, und wobei die erste Referenzsequenz in eine erste Referenzteilsequenz und eine zweite Referenzteilsequenz unterteilt ist, wobei die erste Referenzteilsequenz und die zweite Referenzteilsequenz jeweils die Länge der zweiten Referenzsequenz aufweisen, mit folgenden Schritten:
Lokalisieren der ersten Referenzsequenz und der zweiten Referenzsequenz in dem Empfangsdatenstrom; und
Ermitteln des Datenpakets in dem Empfangsdatenstrom basierend auf einem ermittelbaren Übertragungsparameter, der aus der ersten Referenzsequenz und der zweiten Referenzsequenz ableitbar ist.

22. Verfahren zum Empfangen eines Datenpakets nach Anspruch 21, wobei beim Lokalisieren der ersten Referenzsequenz und der zweiten Referenzsequenz der Empfangsdatenstrom mit der ersten Referenzsequenz und der zweiten Referenzsequenz, die dem Datenempfänger bekannt sind, korreliert wird, um die erste Referenzsequenz und die zweite Referenzsequenz des Datenpakets in dem Empfangsdatenstrom zu lokalisieren.

23. Verfahren zum Empfangen eines Datenpakets nach Anspruch 21 oder 22, wobei beim Ermitteln des Datenpakets der Übertragungsparameter basierend auf einer Frequenzschätzung oder einer Phasenschätzung ermittelt wird.

24. Computerprogramm zur Durchführung eines der Verfahren gemäß einem der Ansprüche 20 bis 23 wenn das Computerprogramm auf einem Computer oder Mikroprozessor abläuft.

## Claims

1. Data transmitter (100) for transmitting a data packet (102) to a data receiver via a communication channel, comprising:
a means (104) for generating the data packet (102) having a first data block (108) and a second data block (110) and a predefined first reference sequence (112) and second reference sequence (114) for synchronizing the data packet in the data receiver, wherein the first reference sequence (112) is longer than the second reference sequence (114), and wherein in the data packet, the second data block (110) is located between the first reference sequence (112) and the second reference sequence (114), and the first reference sequence (112) is located between the first data block (108) and the second data block (110); and
a means (106) for transmitting the data packet (102) to the data receiver via the communication channel;
wherein the data transmitter is **characterized in that** the means (104) for generating the data packet (102) is configured to provide, in the data packet (102), the first reference sequence (112) to be double the length of the second reference sequence (114); and
the means (104) for generating the data packet (102) is configured to subdivide, in the data packet (102), the first reference sequence (112) into a first reference subsequence (112a) and a second reference subsequence (112b), the first reference subsequence (112a) and the second reference subsequence (112b) each having the length of the second reference sequence (114).

2. Data transmitter (100) as claimed in claim 1, wherein the means (104) for generating the data packet (102) is configured to generate a data packet (102) wherein the first reference subsequence (112a), the second reference subsequence (112b) and the second reference sequence (114) are identical.

3. Data transmitter (100) as claimed in any of the previous claims, wherein the means (104) for generating the data packet (102) is configured to provide, in the data packet (102), the first reference sequence (112) and the second reference sequence (114) as pseudorandom sequences or, Maximum-Length, ML sequences.

4. Data transmitter (100) as claimed in claim 2, wherein the means (104) for generating the data packet (102) is configured to provide, in the data packet (102), the first reference subsequence (112a), the second reference subsequence (112b), and the second reference sequence (114) as, Maximum-Length, ML sequences (130), respectively, each having an additional binary element (132).

5. Data transmitter (100) as claimed in any of the previous claims, wherein the means (104) for generating the data packet (102) is configured to provide a third data block (120) in the data packet (102), the third data block (120) in the data packet (102) being located at a data packet start or a data packet end.

6. Data transmitter (100) as claimed in any of the previous claims, wherein the means (104) for generating the data packet (102) is configured to derive the first data block (108) and the second data block (110) of the data packet (102) from a first base data block (124).

7. Data transmitter (100) as claimed in claim 6, wherein the means (104) for generating the data packet (102) is configured to derive a third data block (120) and a fourth data block (122) from a second base data block (126) and to provide the third data block (120) and the fourth data block (122) in the data packet (102), the third data block (120) in the data packet (102) being located at a data packet end, and the fourth data block (122) in the data packet (102) being located at a data packet start.

8. Data receiver (150) for receiving a data packet (102) from a data transmitter via a communication channel, the data packet (102) comprising a first data block (108) and a second data block (110) and a predefined first reference sequence (112) and second reference sequence (114) for synchronizing the data receiver (150), wherein, in the data packet (102), the first data block (110) is located between the first reference sequence (112) and the second reference sequence (114), and the first reference sequence (112) is located between the first data block (108) and the second data block (110), the first reference sequence (112) being double the length of the second reference sequence (114), and the first reference sequence (112) being subdivided into a first reference subsequence (112a) and a second reference subsequence (112b), the first reference subsequence (112a) and the second reference subsequence (112b) each having the length of the second reference sequence (114),comprising
a means (154) for receiving the data packet (102), said means being configured to localize the first reference sequence (112) and the second reference sequence (114) of the data packet (102) in the receive data stream and to determine the data packet (102) on the basis of a determinable transmission parameter which may be derived from the first reference sequence (112) and from the second reference sequence (114).

9. Data receiver (150) as claimed in claim 8, wherein the means (154) for receiving the data packet (102) is configured to correlate the receive data stream with the first reference sequence (112) and with the second reference sequence (114), which are known to the data receiver (150), so as to localize the first reference sequence (112) and the second reference sequence (114) of the data packet (102) in the receive data stream.

10. Data receiver (150) as claimed in claim 8 or 9, wherein the means (154) for receiving the data packet (102) is configured to determine the transmission parameter on the basis of a frequency estimation or a phase estimation.

11. Data receiver (150) as claimed in any of claims 8 to 10, further comprising a means (152) for equalizing the data blocks of the data packet (102), said means being configured to perform equalization for the first data block (108) on the basis of the first reference sequence (112) so as to obtain an equalized first data block (160), and to perform equalization for the second data block (110) on the basis of the first reference sequence (112) or of a reference subsequence adjacent to the second data block (110) and of the second reference sequence (114) so as to obtain an equalized second data block (162).

12. Data receiver (150) as claimed in claim 11, wherein the means (152) for equalizing the data blocks is configured to perform the equalization for the first data block (108) and the second data block (110) while using a frequency estimation, phase estimation or channel estimation.

13. Data receiver (150) as claimed in claim 11 or 12, the means (152) for equalizing the data blocks being configured to decode the equalized first data block (160) and second data block (162) so as to obtain a decoded first data block (164) and second data block (166).

14. Data receiver (150) as claimed in any of claims 11 to 13, the means (152) for equalizing the data blocks being configured to encode the decoded first data block (164) or second data block (166) so as to obtain an encoded first data block (168) or second data block (170).

15. Data receiver (150) as claimed in any of claims 11 to 14, the means (152) for equalizing the data blocks being configured to perform equalization for a third data block (120) on the basis of the encoded first data block (168) if the first data block (108) in the data packet (102) has a smaller temporal distance from the third data block (120) than does the second data block (110), or to perform equalization for the third data block (120) on the basis of the encoded second data block (170) if the second data block (110) in the data packet (102) has a smaller temporal distance from the third data block (120) than does the first data block (108), the third data block (120) being located, in the data packet (102), at a data packet start or data packet end.

16. Data receiver (150) as claimed in claim 15, wherein the means (152) for equalizing the data blocks is configured to perform the equalization for the third data block (120) while using a frequency estimation, phase estimation or channel estimation.

17. Data receiver (150) as claimed in any of claims 11 to 14, wherein the means (152) for equalizing the data blocks is configured to perform equalization for a first data block (108) and a second data block (110), the first data block (108) and the second data block (110) being derived from a first base data block (124).

18. Data receiver (150) as claimed in claim 17, the means (152) for equalizing the data blocks being configured to perform equalization for a third data block (120) on the basis of the encoded first data block (168) if the first data block (108) in the data packet (102) has a smaller temporal distance from the third data block (120) than does the second data block (110), or to perform equalization for the third data block (120) on the basis of the encoded second data block (170) if the second data block (110) in the data packet (102) has a smaller temporal distance from the third data block (120) than does the first data block (108), and to perform equalization for a fourth data block (122) on the basis of the encoded first data block (168) if the first data block (108) in the data packet (102) has a smaller temporal distance from the fourth data block (122) than does the second data block (110), or to perform equalization for the fourth data block (122) on the basis of the encoded second data block (170) if the second data block (110) in the data packet (102) has a smaller temporal distance from the fourth data block (122) than does the first data block (108), the third data block (120) and the fourth data block (122) being derived from a second base data block (126), the third data block (120) in the data packet (102) being located at a data packet end, and the fourth data block (122) in the data packet (102) being located at a data packet start.

19. Data receiver (150) as claimed in claim 18, wherein the means (152) for equalizing the data blocks is configured to perform equalization for the third data block (120) and the fourth data block (122) while using a frequency estimation, phase estimation or channel estimation.

20. Method of transmitting a data packet to a data receiver via a communication channel, comprising:
generating the data packet having a first data block and a second data block and a predefined first reference sequence and second reference sequence for synchronizing the data receiver, wherein the first reference sequence is longer than the second reference sequence, and wherein in the data packet, the first data block is located between the first reference sequence and the second reference sequence, and the first reference sequence is located between the first data block and the second data block, wherein the method is **characterized by** the fact that the first reference sequence is double the length of the second reference sequence, and the first reference sequence being subdivided into a first reference subsequence and a second reference subsequence, the first reference subsequence and the second reference subsequence each having the length of the second reference sequence; and
transmitting the data packet to the data receiver via the communication channel.

21. Method of receiving a data packet from a data transmitter via a communication channel, the data packet comprising a first data block and a second data block and a predefined first reference sequence and second reference sequence for synchronizing the data receiver, wherein, in the data packet, the first data block is located between the first reference sequence and the second reference sequence, and the first reference sequence is located between the first data block and the second data block, the first reference sequence being double the length of the second reference sequence, and the first reference sequence being subdivided into a first reference subsequence and a second reference subsequence, the first reference subsequence and the second reference subsequence each having the length of the second reference sequence, comprising:
localizing the first reference sequence and the second reference sequence in the receive data stream; and
determining the data packet in the receive data stream on the basis of a determinable transmission parameter which may be derived from the first reference sequence and from the second reference sequence.

22. Method of receiving a data packet as claimed in claim 21, wherein during localization of the first reference sequence and of the second reference sequence, the receive data stream is correlated with the first reference sequence and the second reference sequence, which are known to the data receiver, so as to localize the first reference sequence and the second reference sequence of the data packet in the receive data stream.

23. Method of receiving a data packet as claimed in claim 21 or 22, wherein during determination of the data packet, the transmission parameter is determined on the basis of a frequency estimation or a phase estimation.

24. Computer program for performing any of the methods as claimed in any of claims 20 to 23, when the computer program runs on a computer or microprocessor.

## Revendications

1. Emetteur de données (100) pour envoyer un paquet de données (102) par l'intermédiaire d'un canal de communication à un récepteur de données, aux caractéristiques suivantes:
un moyen (104) destiné à générer le paquet de données (102) avec un premier bloc de données (108) et un deuxième bloc de données (110) et une première séquence de référence (112) et une deuxième séquence de référence (114) prédéterminées pour synchroniser le paquet de données dans le récepteur de données, la première séquence de référence (112) étant plus longue que la deuxième séquence de référence (114) et, dans le paquet de données, le deuxième bloc de données (110) se trouvant entre la première séquence de référence (112) et la deuxième séquence de référence (114) et la première séquence de référence (112) se trouvant entre le premier bloc de données (108) et le deuxième bloc de données (110); et
un moyen (106) destiné à envoyer le paquet de données (102) par l'intermédiaire du canal de communication au récepteur de données;
dans lequel l'émetteur de données est **caractérisé par le fait que** le moyen (104) destiné à générer le paquet de données (102) est conçu pour prévoir, dans le paquet de données (102), la première séquence de référence (112) d'une longueur deux fois plus longue que la deuxième séquence de référence (114); et
le moyen (104) destiné à générer le paquet de données (102) est conçu pour subdiviser, dans le paquet de données (102), la première séquence de référence (112) en une première séquence partielle de référence (112a) et une deuxième séquence partielle de référence (112b), la première séquence partielle de référence (112a) et la deuxième séquence partielle de référence (112b) présentant, chacune, la longueur de la deuxième séquence de référence (114).

2. Emetteur de données (100) selon la revendication 1, dans lequel le moyen (104) destiné à générer le paquet de données (102) est conçu pour générer un paquet de données (102) dans lequel la première séquence partielle de référence (112a), la deuxième séquence partielle de référence (112b) et la deuxième séquence de référence (114) sont égales.

3. Emetteur de données (100) selon l'une des revendications précédentes, dans lequel le moyen (104) destiné à générer le paquet de données (102) est conçu pour prévoir, dans le paquet de données (102), la première séquence de référence (112) et la deuxième séquence de référence (114) comme séquences pseudo-aléatoires ou séquences de longueur maximale ML.

4. Emetteur de données (100) selon la revendication 2, dans lequel le moyen (104) destiné à générer le paquet de données (102) est conçu pour prévoir, dans le paquet de données (102), la première séquence partielle de référence (112a), la deuxième séquence partielle de référence (112b) et la deuxième séquence de référence (114), chacune, comme séquence de longueur maximale ML (130), avec un élément binaire additionnel (132).

5. Emetteur de données (100) selon l'une des revendications précédentes, dans lequel le moyen (104) destiné à générer le paquet de données (102) est conçu pour prévoir, dans le paquet de données (102), un troisième bloc de données (120), le troisième bloc de données (120) se trouvant, dans le paquet de données (102), à un début de paquet de données ou à une fin de paquet de données.

6. Emetteur de données (100) selon l'une des revendications précédentes, dans lequel le moyen (104) destiné à générer le paquet de données (102) est conçu pour dériver le premier bloc de données (108) et le deuxième bloc de données (110) du paquet de données (102) d'un premier bloc de données de base (124).

7. Emetteur de données (100) selon la revendication 6, dans lequel le moyen (104) destiné à générer le paquet de données (102) est conçu pour dériver un troisième bloc de données (120) et un quatrième bloc de données (122) d'un deuxième bloc de données de base (126), et pour prévoir le troisième bloc de données (120) et le quatrième bloc de données (122) dans le paquet de données (102), le troisième bloc de données (120) se trouvant, dans le paquet de données (102), à une fin de paquet de données et le quatrième bloc de données (122) se trouvant, dans le paquet de données (102), à un début de paquet de données.

8. Récepteur de données (150) pour recevoir un paquet de données (102) d'un émetteur de données par l'intermédiaire d'un canal de communication, dans lequel le paquet de données (102) présente un premier bloc de données (108) et un deuxième bloc de données (110) et une première séquence e référence (112) et une deuxième séquence de référence (114) prédéterminées pour synchroniser le récepteur de données (150), dans lequel, dans le paquet de données (102), le premier bloc de données (110) se trouve entre la première séquence de référence (112) et la deuxième séquence de référence (114) et la première séquence de référence (112) se trouve entre le premier bloc de données (108) et le deuxième bloc de données (110), dans lequel la première séquence de référence (112) est deux fois plus longue que la deuxième séquence de référence (114), et dans lequel la première séquence de référence (112) est subdivisée en une première séquence partielle de référence (112a) et une deuxième séquence partielle de référence (112b), dans lequel la première séquence partielle de référence (112a) et la deuxième séquence partielle de référence (112b) présentent, chacune, la longueur de la deuxième séquence de référence (114), avec
un moyen (154) destiné à recevoir le paquet de données (102) qui est conçu pour localiser la première séquence de référence (112) et la deuxième séquence de référence (114) du paquet de données (102) dans le flux de données de réception et pour déterminer le paquet de données (102) sur base d'un paramètre de transmission déterminable pouvant être dérivé de la première séquence de référence (112) et de la deuxième séquence de référence (114).

9. Récepteur de données (150) selon la revendication 8, dans lequel le moyen (154) destiné à recevoir le paquet de données (102) est conçu pour corréler le flux de données de réception avec la première séquence de référence (112) et la deuxième séquence de référence (114), qui sont connues du récepteur de données (150), pour localiser la première séquence de référence (112) et la deuxième séquence de référence (114) du paquet de données (102) dans le flux de données de réception.

10. Récepteur de données (150) selon la revendication 8 ou 9, dans lequel le moyen (154) destiné à recevoir le paquet de données (102) est conçu pour déterminer le paramètre de transmission sur base d'une estimation de fréquence ou d'une estimation de phase.

11. Récepteur de données (150) selon l'une des revendications 8 à 10, présentant par ailleurs un moyen (152) destiné à égaliser les blocs de données du paquet de données (102) qui est conçu pour réaliser une égalisation pour le premier bloc de données (108) sur base de la première séquence de référence (112), pour obtenir un premier bloc de données égalisé (160), et pour réaliser une égalisation pour le deuxième bloc de données (110) sur base de la première séquence de référence (112) ou d'une séquence partielle de référence adjacente au deuxième bloc de données (110) et de la deuxième séquence de référence (114), pour obtenir un deuxième bloc de données égalisé (162).

12. Récepteur de données (150) selon la revendication 11, dans lequel le moyen (152) pour égaliser les blocs de données est conçu pour réaliser l'égalisation pour le premier bloc de données (108) et le deuxième bloc de données (110) à l'aide d'une estimation de fréquence, d'une estimation de phase ou d'une estimation de canal.

13. Récepteur des données (150) selon la revendication 11 ou 12, dans lequel le moyen (152) destiné à égaliser les blocs de données est conçu pour décoder le premier bloc de données égalisé (160) et le deuxième bloc de données égalisé (162), pour obtenir un premier bloc de données décodé (164) et un deuxième bloc de données (166).

14. Récepteur de données (150) selon l'une des revendications 11 à 13, dans lequel le moyen (152) destiné à égaliser les blocs de données est conçu pour coder le premier bloc de données décodé (164) ou le deuxième bloc de données décodé (166), pour obtenir un premier bloc de données codé (168) ou un deuxième bloc de données codé (170).

15. Récepteur de données (150) selon l'une des revendications 11 à 14, dans lequel le moyen (152) destiné à égaliser les blocs de données est conçu pour réaliser une égalisation pour un troisième bloc de données (120) sur base du premier bloc de données codé (168) si le premier bloc de données (108) dans le paquet de données (102) présente une plus petite distance dans le temps par rapport au troisième bloc de données (120) que le deuxième bloc de données (110), ou pour réaliser une égalisation pour le troisième bloc de données (120) sur base du deuxième bloc de données codé (170) si le deuxième bloc de données (110) dans le paquet de données (102) présente une plus petite distance dans le temps par rapport au troisième bloc de données (120) que le premier bloc de données (108), le troisième bloc de données (120) dans le paquet de données (102) se trouvant à un début de paquet de données ou une fin de paquet de données.

16. Récepteur de données (150) selon la revendication 15, dans lequel le moyen (152) destiné à égaliser les blocs de données est conçu pour réaliser l'égalisation pour le troisième bloc de données (120) à l'aide d'une estimation de fréquence, d'une estimation de phase ou d'une estimation de canal.

17. Récepteur de données (150) selon l'une des revendications 11 à 14, dans lequel le moyen (152) destiné à égaliser les blocs de données est conçu pour réaliser l'égalisation pour un premier bloc de données (108) et un deuxième bloc de données (110), le premier bloc de données (108) et le deuxième bloc de données (110) étant dérivés d'un premier bloc de données de base (124).

18. Récepteur de données (150) selon la revendication 17, dans lequel le moyen (152) destiné à égaliser les blocs de données est conçu pour réaliser l'égalisation pour un troisième bloc de données (120) sur base du premier bloc de données codé (168) si le premier bloc de données (108) dans le paquet de données (102) présente une plus petite distance dans le temps par rapport au troisième bloc de données (120) que le deuxième bloc de données (110), ou pour réaliser une égalisation pour le troisième bloc de données (120) sur base du deuxième bloc de données codé (170) si le deuxième bloc de données (110) dans le paquet de données (102) présente une plus petite distance dans le temps par rapport à la troisième bloc de données (120) que le premier bloc de données (108), et pour réaliser une égalisation d'un quatrième bloc de données (122) sur base du premier bloc de données codé (168) si le premier bloc de données (108) dans le paquet de données (102) présente une plus petite distance dans le temps par rapport au quatrième bloc de données (122) que le deuxième bloc de données (110), ou pour réaliser une égalisation pour le quatrième bloc de données (122) sur base du deuxième bloc de données codé (170) si le deuxième bloc de données (110) dans le paquet de données (102) présente une plus petite distance dans le temps par rapport au quatrième bloc de données (122) que le premier bloc de données (108), le troisième bloc de données (120) et le quatrième bloc de données (122) étant dérivé d'un deuxième bloc de données de base (126), le troisième bloc de données (120) dans le paquet de données (102) se trouvant à une fin de paquet de données et le quatrième bloc de données (122) dans le paquet de données (102) se trouvant à un début de paquet de données.

19. Récepteur de données (150) selon la revendication 18, dans lequel le moyen (152) destiné à égaliser les blocs de données est conçu pour réaliser l'égalisation pour le troisième bloc de données (120) et le quatrième bloc de données (122) à l'aide d'une estimation de fréquence, d'une estimation de phase ou d'une estimation de canal.

20. Procédé pour émettre un paquet de données par l'intermédiaire d'un canal de communication vers un récepteur de données, aux étapes suivantes consistant à:
générer le paquet de données avec un premier bloc de données et un deuxième bloc de données et une première séquence de référence et une deuxième séquence de référence prédéterminées pour la synchronisation du récepteur de données, où la première séquence de référence est plus longue que la deuxième séquence de référence, et où le premier bloc de données se trouve dans le paquet de données entre la première séquence de référence et la deuxième séquence de référence et la première séquence de référence se trouve entre le premier bloc de données et le deuxième bloc de données, le procédé étant **caractérisé par le fait que** la première séquence de référence est deux fois plus longue que la deuxième séquence de référence, et où la première séquence de référence est subdivisée en une première séquence partielle de référence et une deuxième séquence partielle de référence, la première séquence partielle de référence et la deuxième séquence partielle de référence présentant, chacune, la longueur de la deuxième séquence de référence; et
émettre le paquet de données par l'intermédiaire du canal de communication vers le récepteur de données.

21. Procédé pour recevoir un paquet de données d'un émetteur de données par l'intermédiaire d'un canal de communication, dans lequel le paquet de données présente un premier bloc de données et un deuxième bloc de données et une première séquence de référence et une deuxième séquence de référence prédéterminées pour synchroniser le récepteur de données, dans lequel, dans le paquet de données, le premier bloc de données se trouve entre la première séquence de référence et la deuxième séquence de référence et la première séquence de référence se trouve entre le premier bloc de données et le deuxième bloc de données, dans lequel la première séquence de référence est deux fois plus longue que la deuxième séquence de référence, et dans lequel la première séquence de référence est subdivisée en une première séquence partielle de référence et une deuxième séquence partielle de référence, la première séquence partielle de référence et la deuxième séquence partielle de référence présentant, chacune, la longueur de la deuxième séquence de référence, aux étapes suivantes consistant à:
localiser la première séquence de référence et la deuxième séquence de référence dans le flux de données de réception; et
déterminer le paquet de données dans le flux de données de réception sur base d'un paramètre de transmission déterminable pouvant être dérivé de la première séquence de référence et de la deuxième séquence de référence.

22. Procédé pour recevoir un paquet de données selon la revendication 21, dans lequel, lors de la localisation de la première séquence de référence et de la deuxième séquence de référence, le flux de données de réception est corrélé avec la première séquence de référence et la deuxième séquence de référence, qui sont connues du récepteur de données, pour localiser la première séquence de référence et la deuxième séquence de référence du paquet de données dans le flux de données de réception.

23. Procédé pour recevoir un paquet de données selon la revendication 21 ou 22, dans lequel, lors de la détermination du paquet de données, le paramètre de transmission est déterminé sur base d'une estimation de fréquence ou d'une estimation de phase.

24. Programme d'ordinateur pour réaliser l'un des procédés selon l'une des revendications 20 à 23 lorsque le programme d'ordinateur est exécuté sur un ordinateur ou un microprocesseur.
